Europäisches Patentamt

European Patent Office

Office européen des brevets

(19)

(11) EP 0 453 641 B1

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(51) Int Cl.6: **G06F 17/16**, G06F 17/10, G06F 7/544

(21) Anmeldenummer: **90123234.8**

(22) Anmeldetag: **04.12.1990**

(54) **CORDIC-Prozessor für Vektordrehungen in Carry-Save-Architektur**

CORDIC-processor for vector rotation with carry-save architecture

CORDIC-processeur pour la rotation de vecteurs avec architecture à carry-save

(84) Benannte Vertragsstaaten:
**DE FR GB**

(30) Priorität: **20.04.1990 DE 4012709**

(43) Veröffentlichungstag der Anmeldung:
**30.10.1991 Patentblatt 1991/44**

(73) Patentinhaber: **SIEMENS AKTIENGESELLSCHAFT**
**80333 München (DE)**

(72) Erfinder:
- **Künemund, Ronald, Dipl.-Ing.**
  **W-8157 Dietramszell (DE)**
- **Noll, Tobias, Dipl.-Ing.**
  **W-8056 Neufahrn (DE)**

(56) Entgegenhaltungen:
**WO-A-89/09447**

- **PROCEEDINGS OF ICASSP 86, IEEE PRESS US, Bd.2/4, 7. April 1986, TOKYO JP Seiten 1169 - 1172 TZE-YUN SUNG ET AL 'DOUBLY PIPELINED CORDIC ARRAY FOR DIGITAL SIGNAL PROCESSING ALGORITHMS'**
- **PROCEEDINGS OF ICASSP 84, IEEE PRESS US, Bd.3, 19. März 1984, SAN DIEGO US Seiten 41A.6.1 - 41A.6.4 ED.F.DEPRETTERE ET AL 'PIPELINED CORDIC ARCHITECTURES FOR FAST VLSI FILTERING AND ARRAY PROCESSING'**
- **PROCEEDINGS OF THE 1988 IEEE INTERNATIONAL SYMPOSIUM ON CIRCUITS AND SYSTEMS, IEEE PRESS US, Bd.2/3, 7. Juni 1988, ESPOO FINLAND Seiten 1757 - 1762 U.KLEINE ET AL 'WAVE DIGITAL FILTERS USING CARRY-SAVE ARITHMETIC'**
- **PROCEEDINGS OF THE 7TH SYMPOSIUM ON COMPUTER ARITHMETIC, IEEE PRESS US, 4. Juni 1985, URBANA ILLINOIS, US Seiten 144 - 152 ASIF NASEEM ET AL 'THE MODIFIED CORDIC ALGORITHM'**
- **PROCEEDINGS OF ICASSP 89, IEEE PRESS US, Bd.4, 22. Mai 1989, GLASGOW GB Seiten 2381 - 2384, XP000090094 V.CONSIDINE 'CORDIC TRIGONOMETRIC FUNCTION GENERATOR FOR DSP'**

EP 0 453 641 B1

**Beschreibung**

Die Erfindung betrifft den Gegenstand nach Anspruch 1.

Ein CORDIC-Prozessor dieser Art ist aus der Veröffentlichung mit dem Titel "CORDIC-Prozessoren für die digitale Signalverarbeitung" von Helmut Halm et al. aus der Zeitschrift "me", Band 3 (1989), Heft 1, Seite 22 bis 27 bekannt. Dabei werden Pipeline-Prinzip und festverdrahtete Verschiebeoperationen als Möglichkeiten zur Datenratenerhöhung genannt.

Der Erfindung liegt die Aufgabe zugrunde einen CORDIC-Prozessor der eingangs hingewiesenen Art anzugeben, der aus einfachen Elementarzellen aufgebaut ist, leicht hinsichtlich Genauigkeit und Wortbreite zu modifizieren ist und in der Hauptsache einen guten Kompromiß aus geringer Chipfläche und hoher Datenrate darstellt.

Die genannte Aufgabe wird durch einen CORDIC-Prozessor für Vektordrehungen in Carry-Save-Architektur gelöst, der durch die in Anspruch 1 angegebenen Merkmale bestimmt ist.

Der mit der Erfindung erzielbare Vorteil liegt insbesondere darin, daß sich bei dem nach der Erfindung ausgebildeten CORDIC-Prozessor gegenüber den bekannten CORDIC-Prozessoren aufgrund der Carry-Save-Architektur ein wesentlich besseres Verhältnis von Datenrate zu Chipflächenbedarf ergibt und die Datenrate unabhängig von der Gesamtwortbreite ist.

Vorteilhafte Ausgestaltungen der Erfindung sind durch die in den Unteransprüchen angegebenen Merkmalen gekennzeichnet.

Die Erfindung wird nachfolgend anhand der Zeichnung näher erläutert. Dabei zeigt

Figur 1      eine Prinzipdarstellung des CORDIC-Algorithmus für Vektordrehungen,

Figur 2      eine Darstellung des Unsicherheitsbereiches bei der Vorzeichenabschätzung von Carry-Save-Zahlen,

Figur 3      ein Blockdiagramm zu einem Ausführungsbeispiel eines aus Vektor- und Winkelpfad bestehenden, erfindungsgemäßen CORDIC-Prozessors für Vektordrehungen,

Figur 4      eine Ausschnittsdarstellung des aus Winkelpfad-Basiszellen und Detektoren bestehenden, erfindungsgemäßen Winkelpfades nach Figur 3,

Figur 5      eine Ausschnittsdarstellung des aus Vektorpfad-Basiszellen bestehenden, erfindungsgemäßen Vektorpfades nach Figur 3,

Figur 6      eine Darstellung der erfindungsgemäßen Winkelpfad-Basiszelle,

Figur 7      eine Darstellung der erfindungsgemäßen Vektorpfad-Basiszelle,

Figur 8      eine Darstellung eines erfindungsgemäßen, optimierten Vorzeichendetektors.

Um die Funktionsweise des erfindungsgemäßen CORDIC-Prozessors näher zu verdeutlichen, werden im folgenden kurz der CORDIC-Algorithmus und Besonderheiten hinsichtlich der Vorzeichenabschätzung von Carry-Save-Zahlen erläutert.

Die Idee des CORDIC-Algorithmus ist, die Drehung eines Vektors $P_0$ ($X_0$, $Y_0$) um den Winkel $Z_0$ nicht in einem Schritt auszuführen, sondern den Drehwinkel durch eine Summe von fest vorgegebenen Teilwinkeln $alpha_i$ anzunähern. Mit einer Definition der Teilwinkel $alpha_i = atan$ ($2^{-i}$) werden die, bei Vektordrehungen notwendigen trigonometrischen Operationen ersetzt durch Schiebeoperationen, die leicht zu realisieren sind (Rechtsverschieben einer binären Zahl um i Stellen entspricht dem Faktor $2^{-i}$).

Wird durch fortgesetzte Addition oder Subtraktion der Teilwinkel $alpha_i$ über N-Stufen der Ausgang $Z_N$ gegen Null iteriert, so erhält man für $P_N^{'}$ ($X_N^{'}$, $Y_N^{'}$) die Koordinaten des um $Z_0$ gedrehten Vektors $P_0$ (Rotate Mode).

Setzt man die obengenannten Werte in die allgemeinen Gleichungen für eine zweidimensionale Vektordrehung ein, so erhält man folgende Gleichungen:

$$X_N^{'} = X_0 * \cos (Z_0) - Y_0 * \sin (Z_0)$$

$$Y_N^{'} = Y_0 * \cos (Z_0) + X_0 * \sin (Z_0)$$

Die Iterationsgleichungen hierzu können geschrieben werden als:

$$X_{i+1} = X_i - Y_i * sign (Z_i) * 2^{-i}$$

$$Y_{i+1} = Y_i + X_i * sign (Z_i) * 2^{-i}$$

$$Z_{i+1} = Z_i - sign (Z_i) * W_i$$

mit

$$W_i = atan (2^{-i-1})$$

für die Ausgänge $X_N^{'}$ und $Y_N^{'}$ gilt dann

$$X_N^{'} = X_N * K$$

$$Y_N^{'} = Y_N * K$$

mit

$$K = \prod_{i=1}^{N} (1+2^{-2i})^{-1/2}$$

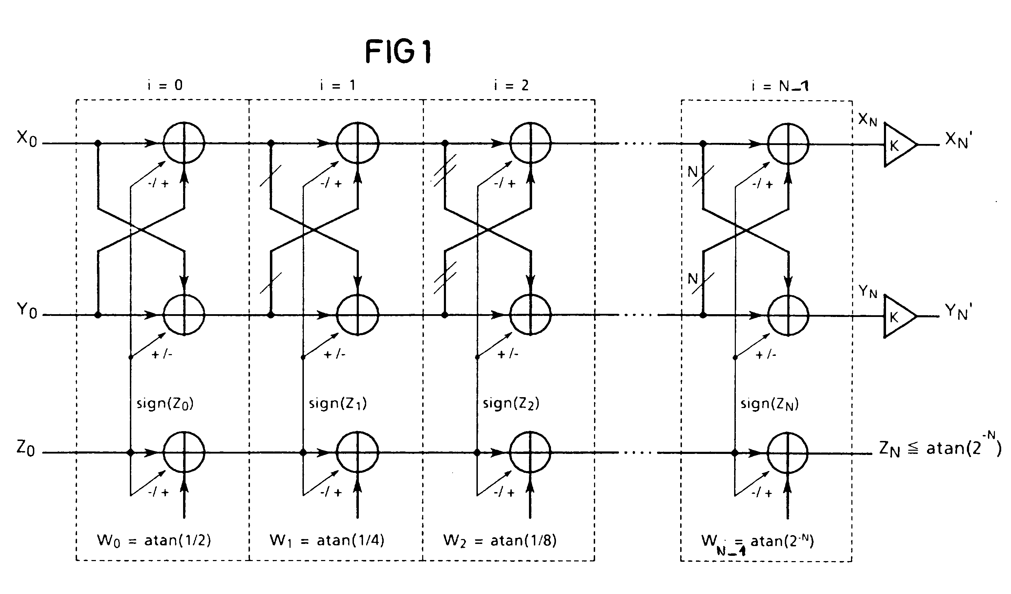

Figur 1 zeigt das Prinzip des CORDIC-Algorithmus für Vektordrehungen. Die Drehung eines Vektors ist somit realisiert durch eine Anzahl von gleichartigen Stufen, die nur aus Addierer/Subtrahierer-Schaltungen, Mitteln zur Realisierung von Verschiebeoperationen und einer Vorzeichendetektion von $Z_i$ (sign $(Z_i)$) bestehen. Die Iterationsstufe i = 0 besitzt Eingänge für die Koordinaten $X_0$ und $Y_0$ eines zu drehenden Vektors, für den Drehwinkel $Z_0$ und für einen nullten Winkelschritt $W_0$ = atan (1/2), wobei das aus dem Drehwinkel $Z_0$ gebildete Vorzeichensignal sign ($Z_0$) die, durch Kreise gekennzeichneten, Addierer/Subtrahierer-Schaltungen eindeutig zu Addierern oder Subtrahierern werden läßt. Durch Addierer und Subtrahierer wird eine Verkoppelung der Vektorkoordinaten $X_0$, $Y_0$ erreicht und ein zu Null zu iterierender Restwinkel aus dem Drehwinkel $Z_0$ und dem nullten Winkelschritt gebildet. Für die weiteren Stufen i = 1 bis N-1 trifft dies ebenfalls zu, wobei durch schräge Striche angedeutet, eine i-fache Verschiebung erfolgt und die Winkelschritte kleiner werden. Am Ausgang der Stufe i = N-1 stehen die Vektorkoordinaten $X_N$ und $Y_N$ neben einem Restwinkel $Z_N$ zur Verfügung.

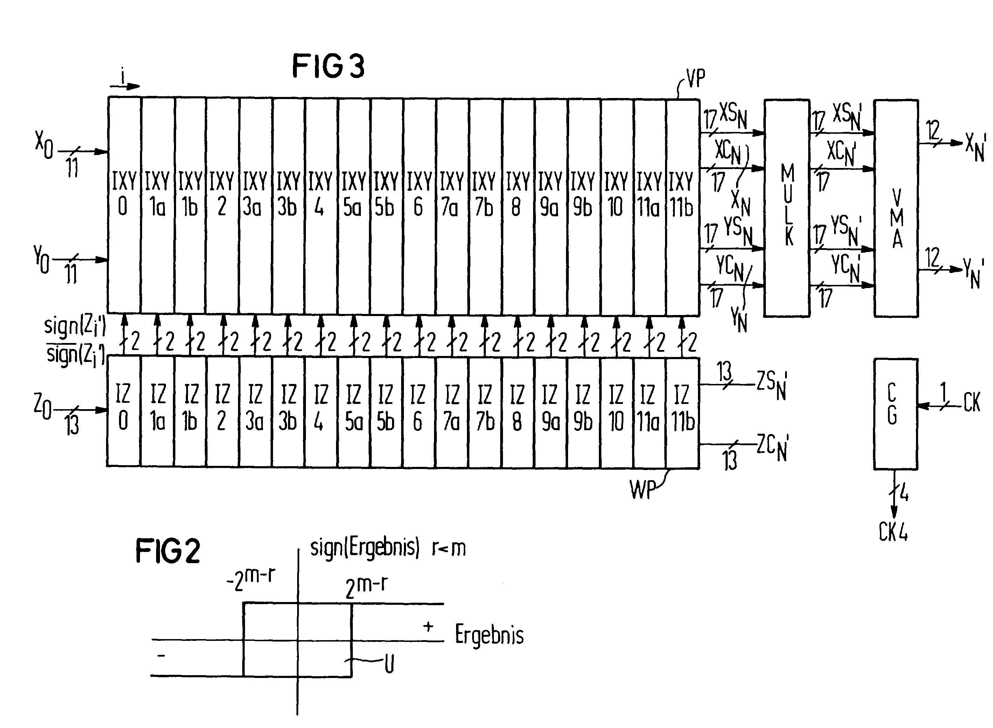

In einer Carry-Save-Architektur wird das Zwischenergebnis einer Addition von Zweierkomplementzahlen repräsentiert durch ein Summen-Wort und ein Carry-Wort, wobei ein Endergebnis erst durch die Addition des Summen- und Carry-Wortes entsteht. Aufgrund der redundanten Zahlendarstellung kann das Vorzeichen dieser Zahl nicht eindeutig festgestellt werden. Das Vorzeichen eines Ergebnisses in Carry-Save-Darstellung kann also nur abgeschätzt werden, in dem eine bestimmte Anzahl führender Wertigkeiten r betrachtet wird. In Figur 2 ist der bei der chenabschätzung entstehende Unsicherheitsbereich U in einem Diagramm das das Vorzeichen sign (Ergebnis) des Ergebnisses in Abhängigkeit des Ergebniswertes Ergebnis, der Wortbreite m und der Anzahl der höchstwertigen Bits r dargestellt. Aus Figur 2 wird deutlich, daß der entstehende Unsicherheitsbereich U bei der Vorzeichenabschätzung umso kleiner wird, je mehr führende Wertigkeiten zur Vorzeichenentscheidung herangezogen werden. Um sich den Vorteil einer hohen, von der Gesamtwortbreite unabhängigen Datenrate der Carry-Save-Architektur zu erhalten, ist die Anzahl der zu betrachtenden Wertigkeiten jedoch so klein wie möglich zu halten.

In Figur 3 ist ein Blockdiagramm zu einem Ausführungsbeispiel eines erfindungsgemäßen CORDIC-Prozessors für Vektordrehungen dargestellt. Dieser Prozessor besteht aus einem Vektorpfad VP, einem Winkelpfad WP, einer Multipliziererschaltung MULK, einer Addiererschaltung VMA (vektor merging adder) und einem Taktgenerator CG. Die Eingangsgrößen des Vektorpfades sind die Komponenten $X_0$, $Y_0$ des Startvektors und die Eingangsgröße des Winkelpfades WP ist der Drehwinkel $Z_0$. Der Vektorpfad VP besteht aus Vektor-Iterationsstufen IXY 0..IXY 11b, gleiches gilt für den Winkelpfad WP, der aus Winkel-Iterationsstufen IZ 0.. IZ 11b besteht, wobei jede der Winkel-Iterationsstufen Vorzeichensignale $\overline{sign (Z_i')}$ an die zugehörige Vektor-Iterationsstufe IXY liefert. In dem in Figur 3 gezeigten Ausführungsbeispiel sind alle ungeradzahligen Iterationsstufen doppelt vorhanden und mit "a" und "b" zur weiteren Unterscheidung gekennzeichnet. Die Ausgangsleitungen für Carry- und Summen-Worte der zwei gedrehten Vektorkomponenten $X_N$, $Y_N$, der letzten Vektor-Iterationsstufe IXY11b sind mit dem Multiplizierer und dessen Ausgangsleitungen für die Carry- und Summen-Worte $XC_N'$, $XS_N'$, $YC_N'$, $YS_N'$ des multiplizierten Vektors wiederum mit der Addiererschaltung VMA verbunden, wobei die Addiererschaltung an ihren Ausgängen den Endergebnisvektor $X_N'$, $Y_N'$ liefert. Darüberhinaus zeigt Figur 3 einen Taktgenerator, der aus einem Einzeltakt CK vier Taktsignale CK 4 erzeugt.

Um einer Genauigkeitsanforderung von $g = 10^{-3}$ zu genügen, muß eine Eingangswortbreite für die Komponenten $X_0$, $Y_0$ des Startvektors von jeweils elf Bit vorgesehen werden. Bei einem Drehwinkel $Z_0$ zwischen + pi/2 und - pi/2 und einer Genauigkeitsanforderung von $g = 10^{-3}$, sind zwei zusätzliche Bits für Vorkommastellen erforderlich, so daß die Eingangswortbreite des Drehwinkels 13 Bit beträgt. Eine interne Wortbreite von 17 Bit ergibt sich aus den 11 Bit der Eingangswortbreite, ein Bit für den Extremfall, daß beide Vektorkomponenten aufaddiert werden, ein Bit für ein Vergrößerungsfaktor 1/K, der sich aufgrund der Iteration ergibt und vier Bits zur Vermeidung von Rundungsfehlern. Durch die in jeder Stufe nötigen Rechtsverschiebungen werden niedrige Wertigkeiten aus dem darstellbaren Zahlenbereich geschoben. Damit trotz der Addition dieser Rundungsfehler über alle Stufen an den Ausgängen $X_N'$ und $Y_N'$ die nauigkeitsanforderung erfüllt ist, muß die interne Wortbreite zusätzlich um vier Nachkommastellen vergrößert werden. Nach dem Addierer VMA kann die Ausgangswortbreite für $X_N'$ und $Y_N'$, bei obengenannter Genauigkeitsanforderung, jeweils auf minimal 11+1 Bit für das Aufaddieren der Vektorkomponenten = 12 Bit reduziert werden.

Der Betrag des Restwinkels $Z_i$ wird von Iterationsstufe zu Iterationsstufe kleiner, so daß die Wortbreite im Winkelpfad nach jeder Stufe um ein Bit reduziert werden kann. Um die vorhandene Wortbreite zur Erzielung der vorgegebenen Genauigkeit voll zu nutzen und um Vorzeichendetektoren DET nicht verschoben anordnen zu müssen, erfolgt eine Skalierung von $Z_i$ mit $2^i$. Auf die eingangs erwähnten Gleichungen angewendet ergeben sich

$$Z_{i+1}' = 2 * (Z_i' + W_i')$$

mit

$$W_i' = - sign (Z_i') * 2^i * atan (2^{-i})$$

Liegt der Betrag des aktuellen Restwinkels $Z_i'$ am Ausgang der Winkel-Iterationsstufe IZi im Unsicherheitsbereich U der Vorzeichenentscheidung, so müßte zusätzlich zu den Vorzeichenentscheidungen "positiv" und "negativ" eine Entscheidung "null" eingeführt werden, so daß die Werte von $X_i$ und $Y_i$ nicht verändert werden. Der Wert von $Z_i'$ wird bei dieser Iterationsstufe entsprechend der Skalierung mit 2 multipliziert, so daß in der nächsten Stufe (oder in einer der nächsten Stufen) der Betrag des Restwinkels wieder so groß wird, daß eine sichere Entscheidung "positiv" oder "negativ" möglich ist. Damit wären Fehlentscheidungen über das Vorzeichen von $Z_i'$ aufgrund des Unsicherheitsbereiches ausgeschlossen.

Die bei einer "Null-Entscheidung" nicht durchgeführten Iterationsstufen müßten dann allerdings auch bei der Berechnung des Korrekturfaktors K berücksichtigt werden. Anstelle einer einfachen Multiplikation der Ausgänge $X_N$ und $Y_N$ mit dem konstanten Korrekturfaktor K, müßte so eine sehr aufwendige Multipliziererlogik treten. Um einen für alle Drehwinkel $Z_0$ konstanten Korrekturfaktor K zu erhalten, kann die "Null-Entscheidung" ersetzt werden durch ein Aufdoppeln aller rationsstufen.

Wird nun in einer Winkel-Iterationsstufe, beispielsweise IZ 1a aufgrund des Unsicherheitsbereichs U eine falsche Entscheidung über das Vorzeichen getroffen, so wird der Betrag des Restwinkels vergrößert statt verkleinert. In der darauffolgenden, aufgedoppelten Winkel-Iterationsstufe, beispielsweise IZ 1b, ist dann eine sichere Vorzeichenentscheidung gewährleistet, so daß der vorhergehende Iterationsschritt wieder rückgängig gemacht wird. Das Resultat über beide Stufen entspricht dann dem Resultat einer Stufe mit einer "Null-Entscheidung", mit dem Unterschied, daß alle Stufen immer ausgeführt werden und somit der Faktor K für beliebige Eingangswinkel $Z_0$ konstant bleibt. Diese Lösung führt allerdings zu einem erheblichen Mehraufwand an Hardware durch die doppelte Auslegung jeder Iterationsstufe.

Die vorgestellten Ansätze gehen davon aus, daß in keiner Stufe Fehler bei der Vorzeichenerkennung gemacht werden dürfen, um die Konvergenz des CORDIC-Algorithmus zu gewährleisten. Die Konvergenzbedingung läßt sich jedoch allgemeiner formulieren:

Im Fall einer falschen Vorzeichenentscheidung bei der Winkel-Iterationsstufe IZ i müssen alle weiteren Winkel-Iterationsstufen IZ i+1 bis IZ N genügen, den Fehler zu beheben und den Ausgang $Z_N'$ im Rahmen einer vorgegebenen

EP 0 453 641 B1

Genauigkeit g zu halten.

Dieser Ansatz führt zu einem festen Zusammenhang zwischen der Anzahl aufzudoppelnder Stufen (Faktor $p_i$) und der Anzahl führender Wertigkeiten r, die zur Vorzeichenentscheidung jeder Stufe betrachtet werden müssen.

$$r \geq \max_{i=0}^{N-1} \left( 2 - i - 1d \left( \sum_{j=i+1}^{N} p_j * W_j - W_i + g \right) \right)$$

mit $p_j = 1$ für eine reguläre Iterationsstufe und $p_j = 2$ für eine aufgedoppelte Iterationsstufe.

Soll zum Beispiel der Restwinkel nach N = 11 Stufen kleiner $10^{-3}$ bleiben, so müssen ohne aufgedoppelte Stufen mindestens neun führende Wertigkeiten zur Vorzeichenabschätzung herangezogen werden. Wird jede Stufe aufgedoppelt ($p_j = 2$), müssen nur noch zwei Bit betrachtet werden. Werden dagegen nur alle ungeradzahligen Stufen aufgedoppelt ($p_j = 1$ für j geradzahlig und $p_j = 2$ für j ungeradzahlig), so genügen vier Bit.

Diese Überlegung führt zu einem Kompromiß in der Architektur zwischen der erreichbaren Datenrate (r so klein wie möglich) und der nötigen Chipfläche (Stufenzahl i so klein wie möglich). Ist die Konvergenz gewährleistet, so bestimmt die Anzahl der Iterationsschritte die erreichbare Genauigkeit an den Ausgängen $X_N'$ und $Y_N'$. Mit der nachfolgenden Ungleichung läßt sich die minimale Zahl von Iterationszyklen N für eine gegebene Genauigkeit berechnen.

$$N \geq - 1d \left( \tan \left( \text{acos} \left( 1 - (1/2 * g)^2 \right) \right) \right)$$

Für das in Figur 3 dargestellte Ausführungsbeispiel ergibt sich bei der gewünschten Genauigkeit g = $10^{-3}$, r = 4 führende Wertigkeiten zur Vorzeichenabschätzung und bei Aufdoppelung aller ungeradzahligen Iterationsstufen eine Zahl von N = 11 notwendigen Winkel-Iterationsstufen.

Die Multipliziererschaltung MULK kann fest verdrahtet realisiert werden, da die Multiplikation stets mit einem konstanten Korrekturfaktor erfolgt. Aufgrund der aufgedoppelten Stufen ergibt sich ein modifizierter Korrekturfaktor K'.

$$K' = \prod_{i=0}^{N} \left( 1 + p_i * 2^{-2i} \right)^{-1/2}$$

Bei der gewählten Konfiguration ergibt sich ein Wert von: K' = 0,5387 dezimal und K' = 0,1000101000-1 im CSD-Code. Die Darstellung in K'im CSD-Code ermöglicht die Realisierung der Multiplikation mit nur drei Verschiebe/Additions-Operationen entsprechend der von Null verschiedenen Wertigkeiten. Die Addiererschaltung VMA ist entweder als Carry-Lookahead-Addierer (CLA) oder Carry-Ripple-Addierer (CRA) ausgeführt, wobei der CLA den Vorteil der hohen Verarbeitungsgeschwindigkeit aufweist, und der CRA in der Wortbreite leichter modifizierbar ist. Der in 1,5 μm CMOS-Technologie realisierte CORDIC-Prozessor kann mit Taktfrequenzen bis typisch 60 MHz betrieben werden.

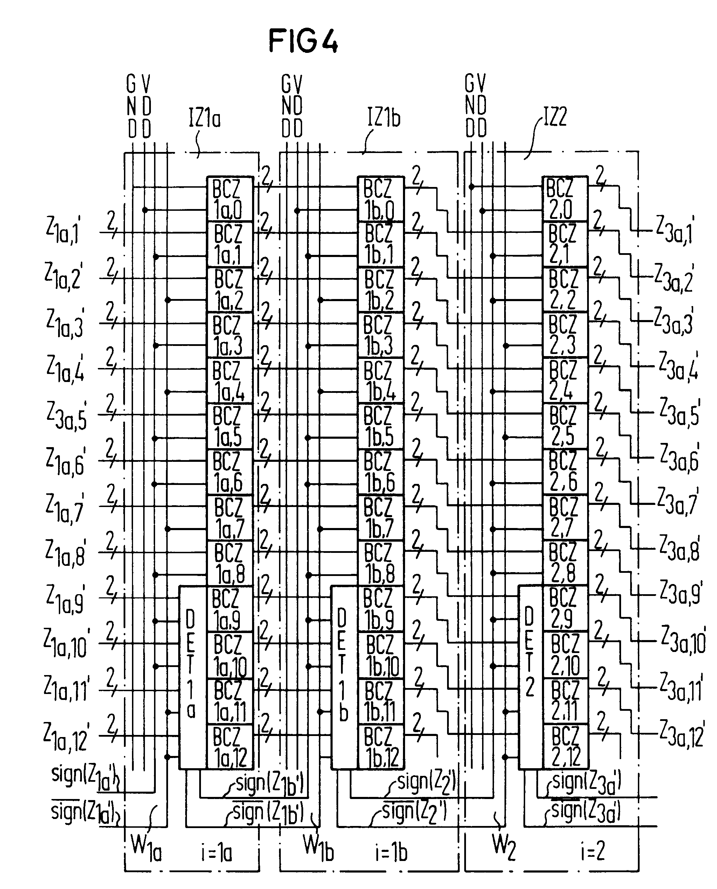

Figur 4 zeigt eine Ausschnittsdarstellung eines aus Winkelpfad-Basiszellen BCZ und Detektoren DET bestehenden, erfindungsgemäßen Winkelpfades nach Figur 3, im Bereich der aufgedoppelten ersten Winkel-Iterationsstufen IZ 1a und IZ 1b sowie der folgenden regulären Winkel-Iterationsstufe IZ 2. Bei der Winkel-Iterationsstufe IZ 1a wird aus den aus Carry- und Summen-Wort bestehenden Eingangsworten $Z_{1a}'$ und dem durch die Vorzeichensignale sign $(Z_{1a}')$, $\overline{\text{sign}(Z_{1a}')}$ entweder invertierten oder nicht invertierten Winkelschritt $W_{1a}$, gemäß der CORDIC-Rechenvorschrift in den Zellen BCZ 1a,0 .. BCZ 1a,12 ein Eingangswort $Z_{1b}'$ gebildet, das ebenso aus Carry- und Summen-Wort besteht. Parallel dazu werden in einem Detektor DET 1a, aus den vier höchstwertigen Bits, Vorzeichensignale sign $(Z_{1b}')$, $\overline{\text{sign}(Z_{1b}')}$ für die folgende Winkel-Iterationsstufe IZ 1b gebildet. Die Winkel-Iterationsstufen IZ 1a und IZ 1b sind identisch. Bei den Aufdoppelstufen, beispielsweise IZ 1b, sowie bei den regulären Stufen, zum Beispiel IZ 2, erfolgt am Ausgang durch die Verbindung mit der nächsten Iterationsstufe eine Linksverschiebung um ein Bit, was einer Skalierung mit dem Faktor 2 entspricht.

Die Verdrahtung der Basiszellen BCZ ergibt sich aus der Auswertung der folgenden Formel.

$$W_i' = -2^i * \text{atan} \left( 2^{-i} \right) * \text{sign} \left( Z_i' \right)$$

5

Daraus ergeben sich für die Iterationsstufen folgende Werte:

$$W_0^{'} = 11{,}00110111000 * \text{sign} ( Z_0^{'} )$$

$$W_1^{'} = 11{,}00010010101 * \text{sign} ( Z_1^{'} )$$

$$W_2^{'} = 11{,}00000101001 * \text{sign} ( Z_2^{'} )$$

$$W_3^{'} = 11{,}00000001011 * \text{sign} ( Z_3^{'} )$$

$$W_4^{'} = 11{,}00000000011 * \text{sign} ( Z_4^{'} )$$

$$W_5^{'} = 11{,}00000000001 * \text{sign} ( Z_5^{'} )$$

$$W_6^{'} - W_{11}^{'} = 11{,}00000000000 * \text{sign} ( Z_i^{'} )$$

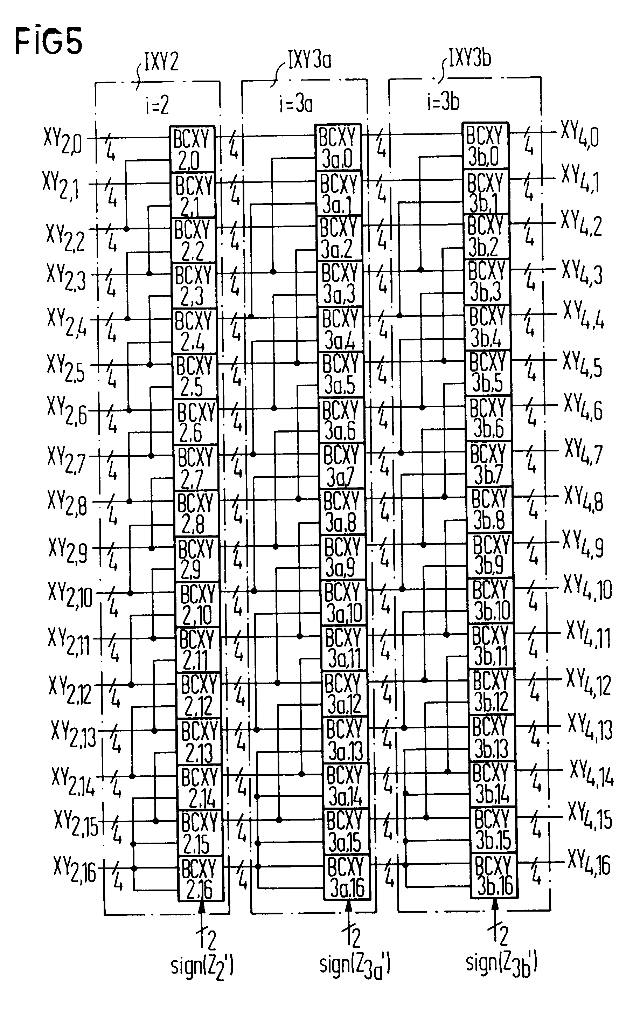

Für den Fall, daß sign ($Z_i^{'}$) negativ ist, müssen alle Bits der Null-Ein-Folge des Ausdrucks $-2^i * \text{atan} (2^{-i})$ invertiert werden und an der Stelle des lsbs wird eine Eins addiert. Dabei ergibt sich eine feste Null-Belegung (GND) des lsb $W_{0,0}^{'}$, eine jeweils feste Eins-Belegung (VDD) der lsbs $W_{1,0}^{'} ... W_{5,0}^{'}$ und bei $W_6^{'} - W_{11}^{'}$ ist jeweils nur noch das msb vom Vorzeichensignal sign ($Z_i^{'}$) abhängig. Die Z-Eingänge der niedrigwertigsten Winkelpfad-Basiszellen $BCZ_{i,0}$ sind im Falle von regulären Stufen und im Falle von Aufdoppelstufen mit dem Ausgang der unmittelbar vorgeschalteten Winkelpfad-Basiszellen verbunden. Figur 5 zeigt eine Ausschnittsdarstellung eines aus Vektor-Basiszellen $BCXY_{i,k}$ bestehenden, erfindungsgemäßen Vektorpfades nach Figur 3, im Bereich der regulären Vektor-Iterationsstufe IXY 2, der Grundstufe IXY 3a und der zur Grundstufe gehörigen Aufdoppelstufe IXY 3b. Die Eingänge $XY_{2,0}.. XY_{2,16}$ und die Ausgänge $XY_{4,0}.. XY_{4,16}$ werden aus den Leitungen für Carry- und Summen-Bits der Vektorkomponenten X, Y gebildet. Es ist jeweils eine Vektorpfad-Basiszelle (BCXY i,k) eingangsseitig mit den Ausgangsleitungen für Carry- und Summenbits ($XC_{i,k}, YC_{i,k}, XS_{i,k}, YS_{i,k}$) der unmittelbar vorgeschalteten Vektorpfad-Basiszelle (BCXY i-1,k) verbunden, sofern die unmittelbar vorgeschaltete Winkelpfad-Basiszelle existiert und andernfalls bei den Vektorpfad-Basiszellen (BCXY 0,k) eingangsseitig entweder die Eingangsleitungen für Carry-Bits oder die für Summen-Bits mit den Prozessoreingangsleitungen zur Eingabe eines Startvektors ($X_0$, $Y_0$) verbunden.

In einer Vektor-Iterationsstufe bestehen die Mittel zur Realisierung einer Verschiebeoperation darin, daß jeweils eine Winkelpfad-Basiszelle $BCXY_{i,k}$ eingangsseitig mit den Ausgangsleitungen für Carry- und Summen-Bits $XC_{i,k+i}, YC_{i,k+i}, XS_{i,k+i}, YS_{i,k+i}$ einer i-fach höherwertigen unmittelbar vorgeschalteten Vektorpfad-Basiszelle ($BXY_{i-1,k+i}$) verbunden sind und falls diese Vektorpfad-Basiszelle nicht existiert mit der höchstwertigen unmittelbar vorgeschaltete Vektorpfad-Basiszelle $BXY_{i-1,16}$(msb) verbunden sind. In jeder Vektor-Iterationsstufe muß entsprechend der eingangsgenannten Gleichungen das Eingangswort $X_i$ mit dem i-mal linksverschobenen Eingangswort $Y_i$ in Abhängigkeit von sign ($Z_i^{'}$) addiert oder subtrahiert werden und umgekehrt. Um den Verdrahtungsaufwand für die Verschiebeoperationen zwischen zwei Stufen zu minimieren, werden beide Datenpfade für X und Y bitweise ineinander geschachtelt.

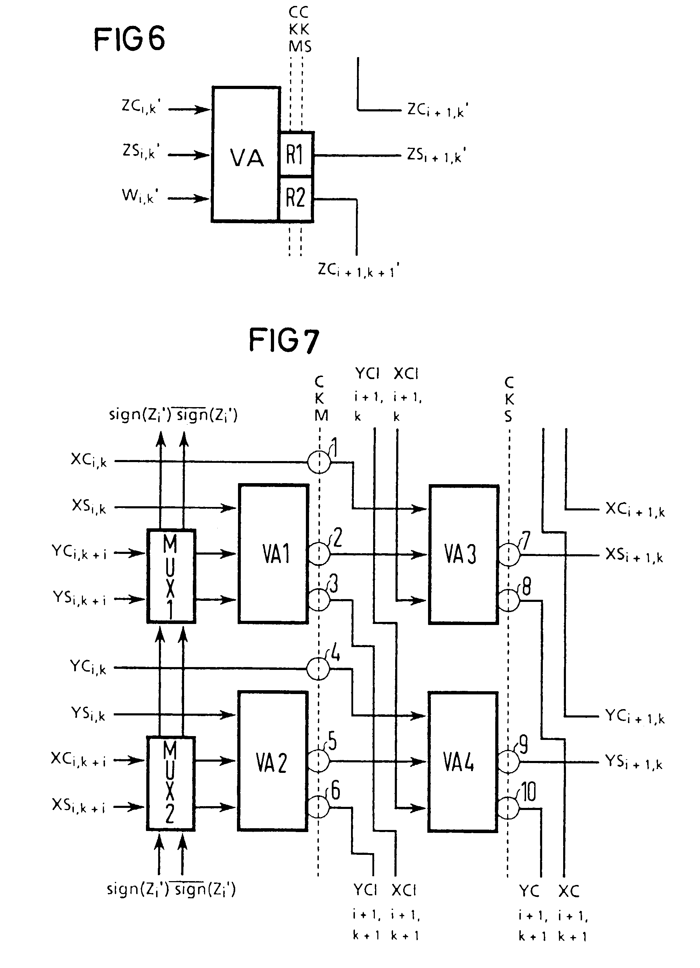

In Figur 6 ist eine erfindungsgemäße Winkelpfad-Basiszelle BCZ dargestellt. Die Eingänge der Winkelpfad-Basiszelle entsprechen den Eingängen eines Volladdierers VA, wobei ein Eingang des Volladdierers VA mit den Eingangsleitungen für ein Winkelbit $W_{i,k}$ verbunden ist und die beiden anderen Eingänge des Volladdierers VA mit den Ausgangsleitungen für das Carry- und Summen-Bit $ZC_{i,k}, ZS_{i,k}$ der unmittelbar vorgeschalteten Winkelpfad-Basiszelle $BCZ_{i-1,k}$ verbunden sind, sofern diese vorgeschaltete Winkelpfad-Basiszelle existiert. Existiert diese vorgeschaltete Winkelpfad-Basiszelle nicht, so sind die Eingänge des Volladdierers VA jeweils mit Logisch Null (GND) belegt. Zur gegenseitigen Entkopplung der Vektor-Iterationsstufen sind $C^2MOS$-Register R1 und R2 vorgesehen, die durch die Taktsignale CKM, CKS getaktet werden. Der unter Figur 3 erwähnte Taktgenerator CG erzeugt Ausgangssignale CK 4, wobei diese den Taktsignalen CKM, CKS und den jeweils dazu invertierten Taktsignalen entsprechen. Die zeitlich versetzten Taktsignale CKM und CKS erlauben eine Datenübergabe nach dem Master-Slave-Prinzip.

Die Ausgangsleitung für das Carry-Bit $ZC_{i+1,k}$ kommt aus der nächst niederwertigeren Basiszelle BCZ i,k-1 und wird durch die Winkelpfad-Basiszelle nur durchgeschleift. Die Ausgangs-Bitleitung für das Summen-Bit $ZS_{i+1,k}$ ist mit dem Ausgang des ersten Registers R1 verbunden, das seinerseits eingangsseitig mit dem Summenausgang des Volladdierers VA verbunden ist. Die Ausgangsleitung für das Carry-Bit $ZC_{i+1,k+1}$ ist zur Weiterleitung an die nächst höherwertige Winkelpfad-Basiszelle BCZ i,kl mit dem Ausgang des zweiten Registers R2 verbunden, das seinerseits eingangsseitig mit dem Carry-Ausgang des Volladdierers VA verbunden ist.

Figur 7 zeigt eine Darstellung einer erfindungsgemäßen Vektorpfad-Basiszelle, die aus zwei Multiplexern MUX1 und MUX 2, aus vier Volladdierern VA1.. VA4 und aus zehn Transmission-Gates 1..10 zur Entkoppelung der Vektor-Iterationsstufen besteht. Eine Eingangsleitung für das Summen-Bit $XS_{i,k}$ einer ersten Vektorkomponente X ist mit einem ersten Eingang des ersten Volladdierers VA1 und eine Eingangsleitung für das Summen-Bit $YS_{i,k}$ einer zweiten Vektorkomponente Y ist mit einem ersten Eingang des zweiten Volladdierers VA2 verbunden. Eine Eingangsleitung für das Carry-Bit $XC_{i,k}$ einer ersten Vektorkomponente X ist mit einem ersten Eingang des dritten Volladdierers VA3 über das durch ein erstes Taktsignal CKM getaktete erste Transmission-Gate 1 verbunden und eine Eingangsleitung für das Carry-Bit $YC_{i,k}$ einer zweiten Vektorkomponente Y ist mit einem ersten Eingang des vierten Volladdierers VA4 über das ebenfalls durch ein erstes Taktsignal CKM getaktete vierte Transmission-Gate 4 verbunden. Eine Eingangsleitung für das i-fach höherwertige Carry-Bit $YC_{i,k+i}$ der zweiten Vektorkomponente Y ist über den ersten Multiplexer MUX 1 mit einem zweiten Eingang des ersten Volladdierers VA1 und das i-fach höherwertige Summen-Bit $YS_{i,k+i}$ der zweiten Vektorkomponente Y ist ebenfalls über den ersten Multiplexer MUX 1 mit dem dritten Eingang des ersten Volladdierers VA1 verbunden. Das i-fach höherwertige Carry-Bit $XC_{i,k+i}$ der ersten Vektorkomponente X ist über den zweiten Multiplexer MUX 2 mit einem zweiten Eingang des zweiten Volladdierers VA 2 und das i-fach höherwertige Summen-Bit $XS_{i,k+i}$ der ersten Vektorkomponente X ist ebenfalls über den zweiten Multiplexer MUX 2 mit dem dritten Eingang des zweiten Volladdierers VA 2 verbunden. Die Multiplexer MUX 1, MUX 2, schalten abhängig von den Vorzeichensignalen sign $(Z_i')$, $\overline{\text{sign} (Z_i')}$, die Carry- und Summen-Bits der unmittelbar vorgeschalteten Vektor-Iterationsstufe entweder invertiert oder nicht invertiert auf die Volladdierer VA 1 bzw. VA 2 durch. Der Summenausgang des ersten Volladdierers VA 1 ist über das zweite Transmission-Gate 2 mit einem zweiten Eingang des dritten Volladdierers VA 3 und der Summeneingang des zweiten Volladdierers VA 2 ist über das fünfte Transmission-Gate 5 mit einem zweiten Eingang des vierten Volladdierers VA 4 verbunden, wobei beide Transmission-Gates 2,5 durch ein ersten Taktsignal CKM getaktet werden. Eine Ausgangsleitung für ein erststufiges Carry-Bit $XCI_{i+1,k+1}$ einer ersten Vektorkomponente ist über das dritte Transmission-Gate 3 mit dem Carry-Ausgang des ersten Volladdierers VA 1 und eine Ausgangsleitung für ein erststufiges Carry-Bit $YCI_{i+1,k+1}$ der zweiten Vektorkomponente ist über das sechste Transmission-Gate 6 mit dem Carry-Ausgang des zweiten Volladdierers VA 2 verbunden, wobei beide Transmission-Gates durch ein erstes Taktsignal CKM getaktet werden. Eine Eingangsleitung für ein erststufiges Carry-Bit $XCI_{i+1,k}$ einer ersten Vektorkomponente X aus der nächst niederwertigeren Vektorpfad-Basiszelle BCXY i, k-1 ist mit dem dritten Eingang des dritten Volladdierers VA 3 und eine Eingangsleitung für ein erststufiges Carry-Bit $YCI_{i+1,k}$ aus der zweiten Vektorkomponente Y der nächst niederwertigeren Vektorpfad-Basiszelle BCXY i,k-1 ist mit dem dritten Eingang des vierten Volladdierers VA 4 verbunden. Die Eingangsleitungen für zweitstufige Carry-Bits $XC_{i+1,k}$, $YC_{i+1,k}$ der Vektorkomponenten X,Y aus den nächstniederwertigeren Vektorpfad-Basiszelle BCXY i, k-1 sind auf die Ausgangsleitungen für die unmittelbaren nachgeschaltete Vektor-Iterationsstufe der Vektorpfad-Basiszelle BCXY i, k durchgeschleift. Der Summenausgang des dritten Volladdierers VA 3 ist über das siebte Transmission-Gate 7 mit der Ausgangsleitung für das Summen-Bit $XS_{i+1,k}$ einer ersten Komponente der unmittelbar nachgeschalteten Iterationsstufe und der Summenausgang des vierten Volladdierers VA 4 ist über das neunte Transmission-Gate 9 mit der Ausgangsleitung $YS_{i+1,k}$ für das Summen-Bit der zweiten Komponente der unmittelbar nachgeschalteten Vektor-Iterationsstufe verbunden, wobei die Transmission-Gates 7,9 durch ein zweites Taktsignal CKS getaktet werden. Eine Ausgangsleitung für ein zweitstufiges Carry-Bit $XC_{i+1,k+1}$ einer ersten Vektorkomponente ist über das achte Transmission-Gate 8 mit dem Carry-Ausgang des dritten Volladdierers VA 3 und eine Ausgangsleitung für ein zweitstufiges Carry-Bit $YC_{i+1,k+1}$ der zweiten Vektorkomponente ist über das zehnte Transmission-Gate 10 und mit dem Carry-Ausgang des vierten Volladdierers VA 4 verbunden, wobei die Transmission-Gates 8,10 durch ein zweites Taktsignal CKS getaktet sind.

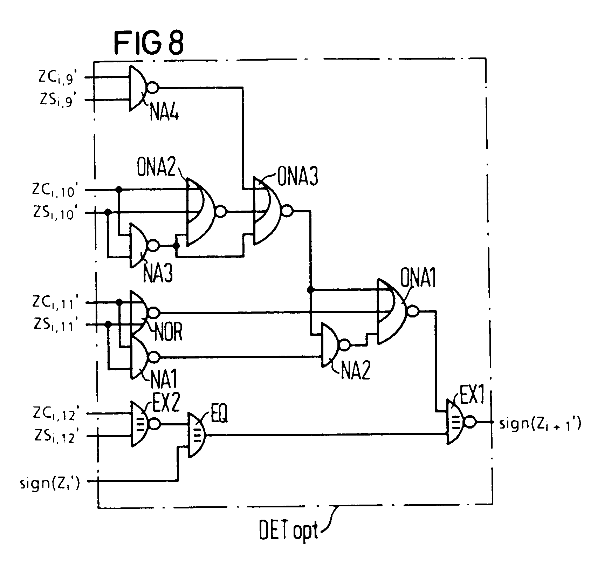

Eine einfache Realisierung der Logik zur Vorzeichenabschätzung besteht in einem Carry-Ripple-Addierer für die vier höchsten Wertigkeiten von $Z_i'$, dessen Vorzeichen als Vorzeichen der entsprechenden Carry-Save-Zahl interpretiert wird. Da die vier höchstwertigen Bits der skalierten Winkelschritte $W_0'$.. $W_{11}'$ alle, wie eingangs gezeigt, mit den höchstwertigen Bits 11,00 beginnen, kann der vier-Bit-Ripple-Addierer zu dem, in Figur 8 dargestellten, optimierten Detektor $DET_{opt}$ vereinfacht werden. Die Vorzeichenabschätzung erfolgt so parallel zur Addition von $Z_i'$ und $W_i'$ um damit die Laufzeit einer Stufe zu verringern. Durch den optimierten Vorzeichendetektor $DET_{opt}$ wird aus den vier höchstwertigen Carry- und Summen-Bits $ZC_{i,9}'$ $ZS_{i,9}'$ ... $ZC_{i,12}'$, $ZS_{i,12}'$ einer unmittelbar vorgeschalteten Winkel-Iterationsstufe IZ i-1 und dem nicht invertierten Vorzeichenausgangssignal sign $(Z_i')$ einer unmittelbar vorgeschalteten Winkel-Iterationsstufe IZ i-1 ein Vorzeichenausgangssignal sign $(Z_{i+1}')$ bildet. Das Vorzeichenausgangssignal sign $(Z_i')$ der unmittelbar vorgeschalteten Winkel-Iterationsstufe ist mit einem von zwei Eingängen einer valenzschaltung EQ verbunden und der Ausgang der Äquivalenzschaltung EQ wiederum ist mit einem von zwei Eingängen einer ersten EXOR-Schaltung EX1 verbunden. Die höchstwertigen Carry- und Summen-Bits $ZC_{i,12}'$, $ZS_{i,12}'$ sind mit einer zweiten EXOR-Schaltung EX2 verknüpft und der Ausgang der zweiten EXOR-Schaltung EX2 ist mit dem zweiten der zwei Eingänge der valenzschaltung EQ verbunden. Die zweithöchstwertige Carry- und Summen-Bits $ZC_{i,11}'$, $ZS_{i,11}'$ sind mit einer NOR-Schaltung verknüpft, wobei der Ausgang der NOR-Schaltung mit einem von zwei ODER-Eingängen einer ersten ODER-NAND-Schaltung ONA1 verbunden ist und diese Carry- und Summen-Bits ebenfalls mit einer ersten NAND-Schaltung NA1 verknüpt sind, wobei der Ausgang dieser ersten NAND-Schaltung NA1 mit einem von zwei Eingängen einer zweiten NAND-Schaltung NA2 verbunden ist und der Ausgang der zweiten NAND-Schaltung NA2 mit einem direkten NAND-Eingang der ersten ODER-NAND-Schaltung ONA1 verbunden ist. Die jeweils dritthöchstwertigen Carry- und Summen-Bits $ZC_{i,10}{}'$, $ZS_{i,10}{}'$ sind mit der Eingangs-ODER-Schaltung einer zweiten ODER-NAND-Schaltung ONA2 verknüpft, wobei der Ausgang der zweiten ODER-NAND-Schaltung ONA2 mit einem von zwei ODER-Eingängen einer dritten ODER-NAND-Schaltung ONA3 verbunden ist. Die dritthöchstwertigen Carry- und Summen-Bits sind ebenfalls durch eine dritte NAND-Schaltung NA3 verknüpft, wobei der Ausgang dieser NAND-Schaltung NA3 jeweils mit dem direkten NAND-Eingang der zweiten und dritten ODER-NAND-Schaltung ONA2, ONA3 verbunden ist. Die vierthöchstwertigen Carry- und Summen-Bits $ZC_{i,9}{}'$, $ZS_{i,9}{}'$ sind mit einer vierten NAND-Schaltung NA4 verknüpft, der Ausgang dieser NAND-Schaltung NA4, ist mit dem zweiten ODER-Eingang der dritten ODER-NAND-Schaltung ONA3 verbunden und der Ausgang dieser ODER-NAND-Schaltung ONA3 ist jeweils mit dem zweiten ODER-Eingang der ersten ODER-NAND-Schaltung ONA1 und dem zweiten Eingang der zweiten NAND-Schaltung NA2 verbunden. Der Ausgang der ersten ODER-NAND-Schaltung ONA1 ist mit dem zweiten Eingang der ersten EXOR-Schaltung EX1 verbunden und der Ausgang dieser EXOR-Schaltung EX1 liefert das Vorzeichenausgangssignal sign $(Z_{i+1}{}')$ des optimierten Vorzeichendetektors $DET_{opt}$.

Es besteht auch die Möglichkeit den CORDIC-Algorithmus auch für andere Modi (Multiplikation, Division, Quadratwurzel oder hyperbolische Funktionen) in Carry-Save-Architektur zu realisieren. Ein universeller CORDIC-Prozessor müßte daher, über alle Parameter gesteuert, in allen Modi zu betreiben sein, wobei wahlweise Y oder Z zu 0 iteriert werden muß. Weitergehende Konvergenzbetrachtungen haben gezeigt, daß eine Kombination der unterschiedlichen Modi in einem Prozessor mit Carry-Save-Architektur prinzipiell realisierbar ist.

**Patentansprüche**

1. Ein Coordinate Rotation Digital Computer-Prozessor (CORDIC-Prozessor) für Vektordrehungen in Carry-Save-Architektur, insbesondere zur Lösung von Problemen der Echtzeitverarbeitung, mit

    a) einem Vektorpfad (VP) und einem Winkelpfad (WP), wobei der Vektorpfad aus einer Vielzahl in Reihe geschalteter Vektor-Iterationsstufen (IXY) und der Winkelpfad aus einer Vielzahl in Reihe geschalteter Winkel-Iterationsstufen (IZ) besteht,

    b) einer Vielzahl von Einrichtungen zur gegenseitigen Entkopplung der Vektor-Iterationsstufen (IXY) und einer Vielzahl von Einrichtungen zur gegenseitigen Entkopplung der Winkel-Iterationsstufen (IZ), um eine Verarbeitung nach dem bandprinzip (Pipelining) zu ermöglichen,

    c) einer Vielzahl von Vektor-Iterationsstufen (IXY) und einer Vielzahl von Winkel-Iterationsstufen (IZ), die Additions/Subtraktions-Schaltungen enthalten, bei denen, innerhalb eines Taktintervalls, nur unvollständige Additions/Subtraktions-Operationen erfolgen und Zwischenergebnisse am Ende des Taktintervalls in Form eines Carry-Wortes und eines Summen-Wortes (Carry-Save-Zahl) auf getrennten Leitungen für Carry- und Summen-Bits $(XC_{i,k}, YC_{i,k}, XS_{i,k}, YS_{i,k})$ am Ausgang jeder Vektor- und Winkel-Iterationsstufe zur Weiterverarbeitung zur Verfügung stehen,

    d) einer Vielzahl von Vektor-Iterationsstufen (IXY) und einer Vielzahl von Winkel-Iterationsstufen (IZ), mit Mitteln zur Realisierung von Verschiebeoperationen (Multiplikation mit Potenzen der Zahl Zwei), die ein Verschieben von Carry- und Summen-Bits erlauben,

    e) einer Vielzahl von Winkel-Iterationsstufen (IZ) mit Vorzeichendetektoren (DET), die Carry- und Summen-Bits zur Vorzeichendetektion verwenden,

    f) einer Multiplizierer-Schaltung (MULK), die mit den Ausgangsleitungen für die Carry- und Summen-Worte $(XC_N, YC_N, XS_N, YS_N)$ einer letzten Vektor-Iterationsstufe $(IXY_N)$ verbunden ist und sowohl das Carry-Wort als auch das Summen-Wort einer jeden Vektorkomponente $(X_N, Y_N)$ mit einem Korrekturfaktor (K) multipliziert, und

    g) eine Addiererschaltung (VMA), die mit den Ausgangsleitungen für die Carry- und Summen-Worte $(XC_N{}'$, $YC_N{}', XS_N{}', YS_N{}')$ einer Multipliziererschaltung verbunden sind und die die Carry- und Summen-Worte beider Vektorkomponenten zu Komponenten eines Endergebnisvektors ($X_N'$, $Y_N'$) aufaddiert.

2. CORDIC-Prozessor nach Anspruch 1, **dadurch gekennzeichnet**, daß die Winkel-Iterationsstufe ($IZ_i$) aus einer Vielzahl gleichartiger Winkelpfad-Basiszellen (BCZ i,k) besteht,

- daß die Vorzeichendetektoren (DETi) zu Winkelpfad-Basiszellen (BCZ i,k) parallelgeschaltet sind,

- daß die Eingangsleitungen für Winkel-Bits ($W_{i,k}'$) der Winkelpfad-Basiszellen (BCZ i,k) so mit Leitungen für die nicht invertierten und invertierten Vorzeichenausgangssignale (sign ($Z_i'$), $\overline{\text{sign} (Z_i')}$) der jeweils unmittelbar vorgeschalteten Winkel-Iterationsstufe (IZ i-1) verbunden sind, daß dies einer Produktbildung aus dem Vorzeichenausgangssignal ( sign ($Z_i'$)) der unmittelbar vorgeschalteten Winkel-Iterationsstufe und der binären Darstellung eines jeweils vorgegebenen, skalierten negativen Winkelschritts ($-2^i * \text{atan} (2^{-i})$) entspricht, wobei durch die Produktbildung nicht veränderbare Bits mit festen logischen Werten (GND oder VDD) belegt werden,

- und daß die zur Skalierung der Carry- und Summen-Worte am Ausgang einer Winkel-Iterationsstufe erforderlichen Mittel zur Realisierung einer Verschiebeoperation darin bestehen, daß die Ausgangsleitungen für die Carry-Save-Bits ($ZC_{i,k}'$, $ZS_{i,k}'$) einer Winkelpfad-Basiszelle (BCZ i,k) jeweils mit den Eingängen der nächst höherwertigen Winkelpfad-Basiszelle (BCZ i+1,k+1) einer unmittelbar nachfolgenden Winkel-Iterationsstufe (IZ i+1) verbunden sind.

3. CORDIC-Prozessor nach Anspruch 1, **dadurch gekennzeichnet**, daß Winkelpfad-Basiszellen (BCZ i+k) einer Winkel-Iterationsstufe (IZ i) je einen Volladdierer (VA) enthalten,

- daß als Einrichtung zur gegenseitigen Entkopplung der Vektor-Iterationsstufen jeweils für Carry-Bit und Summen-Bit ein, durch Taktsignale (CKM, CKS) getaktetes, Register (R1 und R2) dem Volladdierer (VA) nachgeschaltet ist,

- daß die Eingänge einer Winkelpfad-Basiszelle den Eingängen des Volladdierers (VA) entsprechen, wobei ein Eingang des Volladdierers (VA) mit der Eingangsleitung für ein Winkelbit ($W_{i,k}'$) verbunden ist, und die beiden anderen Eingänge des Volladdierers (VA) mit den Ausgangsleitungen für das Carry- und Summen-Bit ($ZC_{i,k}$, $ZS_{i,k}$) der unmittelbar vorgeschalteten Winkelpfad-Basiszelle ($BCZ_{i-1,k}$) verbunden sind, sofern diese vorgeschaltete Winkelpfad-Basiszelle existiert und jeweils mit Logisch Null (GND) beschaltet sind, falls diese vorgeschaltete Winkelpfad-Basiszelle nicht existiert,

- daß die Ausgangsleitung für das Carry-Bit ($ZC_{i+1,k}'$) aus der nächst niederwertigeren Basiszelle (BCZ i,k-1) kommt und durch die Winkelpfad-Basiszelle nur durchgeschleift wird,

- daß die Ausgangs-Bitleitung für das Summen-Bit ($ZS_{i+1,k}'$) mit dem Ausgang des ersten Registers (R1) verbunden ist, das seinerseits eingangsseitig mit dem Summenausgang des Volladdierers (VA) verbunden ist, und

- daß die Ausgangsleitung für das Carry-Bit ($ZC_{i+1, k+1}'$) zur Weiterleitung an die nächst höherwertige Winkelpfad-Basiszelle (BCZ i,k+1) mit dem Ausgang des zweiten Registers (R2) verbunden ist, das seinerseits eingangsseitig mit dem Carry-Ausgang des Volladdierers (VA) verbunden ist.

4. CORDIC-Prozessor nach Anspruch 1, **dadurch gekennzeichnet,** daß die Vektor-Iterationsstufe (IXY i) aus einer Vielzahl gleichartiger Vektorpfad-Basiszellen (BCXY i,k) besteht,

- daß jeweils eine Vektorpfad-Basiszelle (BCXY i,k) eingangsseitig mit den Ausgangsleitungen für Carry- und Summenbits ($XC_{i,k}$, $YC_{i,k}$, $XS_{i,k}$, $YS_{i,k}$) der unmittelbar vorgeschalteten Vektorpfad-Basiszelle (BCXY i-1,k) verbunden ist, sofern die unmittelbar vorgeschaltete Winkelpfad-Basiszelle existiert und andernfalls bei der Vektorpfad-Basiszelle (BCXY 0,k) eingangsseitig entweder die Eingangsleitungen für Carry-Bits oder die für Summen-Bits mit den Prozessoreingangsleitungen zur Eingabe eines Startvektors ($X_0$, $Y_0$) verbunden sind,

- daß in einer Vektor-Iterationsstufe die Mittel zur Realisierung einer Verschiebeoperation darin bestehen, daß jeweils eine Winkelpfad-Basiszelle ($BCXY_{i,k}$) eingangsseitig mit den Ausgangsleitungen für Carry- und Summen-Bits ($XC_{i,k+i}$, $YC_{i,k+i}$, $XS_{i,k+i}$, $YS_{i,k+i}$) einer i-fach höherwertigen unmittelbar vorgeschalteten Vektorpfad-Basiszelle ($BXY_{i-1, k+i}$) verbunden sind und falls diese Vektorpfad-Basiszelle nicht existiert mit der höchstwertigen unmittelbar vorgeschaltete Vektorpfad-Basiszelle ($BXY_{i-1,16}$) verbunden sind.

**5.** CORDIC-Prozessor nach Anspruch 1, **dadurch gekennzeichnet,** daß eine Vektorpfad-Basiszelle ($BCXY_{i,k}$) aus zwei Multiplexern (MUX1 und MUX2), aus vier Volladdierern (VA1...VA4) und aus der Einrichtung zur gegenseitigen Entkopplung der Vektor-Iterationsstufen in Form von 10 Transmission-Gates (1...10) besteht,

- daß eine Eingangsleitung für das Summen-Bit ($XS_{i,k}$) einer ersten Vektorkomponente (X) mit einem ersten Eingang des ersten Volladdierers (VA1) und eine Eingangsleitung für das Summen-Bit ($YS_{i,k}$) einer zweiten Vektorkomponente (Y) mit einem ersten Eingang des zweiten Volladdierers (VA2) verbunden ist,

- daß eine Eingangsleitung für das Carry-Bit ($XC_{i,k}$) einer ersten Vektorkomponente (X) mit einem ersten Eingang des dritten Volladdierers (VA3) über das durch ein erstes Taktsignal (CKM) getaktete erste Transmission-Gate (1) und eine Eingangsleitung für das Carry-Bit ($YC_{i,k}$) einer zweiten Vektorkomponente (Y) mit einem ersten Eingang des vierten Volladdierers (VA4) über das ebenfalls durch ein erstes Taktsignal (CKM) getaktete vierte Transmission-Gate (4) verbunden ist,

- daß eine Eingangsleitung für das i-fach höherwertige Carry-Bit ($YC_{i,k+i}$) der zweiten Vektorkomponente (Y) über den ersten Multiplexer (MUX1) mit einem zweiten Eingang des ersten Volladdierers (VA1), das i-fach höherwertige Summen-Bit ($YS_{i,k+i}$) der zweiten Vektorkomponente (Y) ebenfalls über den ersten Multiplexer (MUX1) mit dem dritten Eingang des ersten Volladdierers (VA1), das i-fach höherwertige Carry-Bit ($XC_{i,k+i}$) der ersten Vektorkomponente (X) über den zweiten Multiplexer (MUX2) mit einem zweiten Eingang des zweiten Volladdierers (VA2) und das i-fach höherwertige Summen-Bit ($XS_{i,k+i}$) der ersten Vektorkomponente (X) ebenfalls über den zweiten Multiplexer (MUX2) mit dem dritten Eingang des zweiten Volladdierers (VA2) verbunden ist, wobei die Multiplexer (MUX1, MUX2), abhängig von den Vorzeichensignalen ($sign(Z_i')$, $\overline{sign(Z_i')}$) der unmittelbar vorgeschalteten Vektor-Iterationsstufe, die Carry- und Summen-Bits invertieren oder nicht invertieren,

- daß der Summenausgang des ersten Volladdierers (VA1) über das zweite Transmission-Gate (2) mit einem zweiten Eingang des dritten Volladdierers (VA3) und der Summenausgang des zweiten Volladdierers (VA2) über das fünfte Transmission-Gate (5) mit einem zweiten Eingang des vierten Volladdierers (VA4) verbunden ist, wobei beide Transmission-Gates (2, 5) durch ein erstes Taktsignal (CKM) getaktet werden,

- daß eine Ausgangsleitung für ein erststufiges Carry-Bit ($XCI_{i+1,k+1}$) einer ersten Vektorkomponente über das dritte Transmission-Gate (3) mit dem Carry-Ausgang des ersten Volladdierers (VA1) und eine Ausgangsleitung für ein erststufiges Carry-Bit ($YCI_{i+1,k+1}$) der zweiten Vektorkomponente über das sechste Transmission-Gate (6) mit dem Carry-Ausgang des zweiten Volladdierers (VA2) verbunden ist, wobei beide Transmission-Gates durch ein erstes Taktsignal (CKM) getaktet werden,

- daß eine Eingangsleitung für ein erststufiges Carry-Bit ($XCI_{i+1,k}$) einer ersten Vektorkomponente (X) aus der nächstniederwertigeren Vektorpfad-Basiszelle (BCXY i,k-1) mit dem dritten Eingang des dritten Volladdierers (VA3) und eine Eingangsleitung für ein erststufiges Carry-Bit ($YCI_{i+1,k}$) aus der zweiten Vektorkomponente (Y) der nächstniederwertigeren Vektorpfad-Basiszelle (BCXY i,k-1) mit dem dritten Eingang des vierten Volladdierers (VA4) verbunden ist,

- daß die Eingangsleitungen für zweitstufige Carry-Bits ($XC_{i+1,k}$, $YC_{i+1,k}$) der Vektorkomponenten (X,Y) aus der nächstniederwertigeren Vektorpfad-Basiszelle (BCXY i,k-1) auf die Ausgangsleitungen für die unmittelbar nachgeschaltete Vektor-Iterationsstufe der Vektorpfad-Basiszelle (BCXY i,k) durchgeschleift werden,

- daß der Summenausgang des dritten Volladdierers (VA3) über das siebte Transmission-Gate (7) mit der Ausgangsleitung für das Summen-Bit ($XS_{i+1,k}$) einer ersten Komponente der unmittelbar nachgeschalteten Iterationsstufe und der Summenausgang des vierten Volladdierers (VA4) über das neunte Transmission-Gate (9) mit der Ausgangsleitung ($YS_{i+1,k}$) für das Summen-Bit der zweiten Komponente der unmittelbar nachgeschalteten Vektor-Iterationsstufe verbunden sind, wobei die Transmission-Gates (7, 9) durch ein zweites Taktsignal (CKS) getaktet werden,

- und daß eine Ausgangsleitung für ein zweitstufiges Carry-Bit ($XC_{i+1,k+1}$) einer ersten Vektorkomponente über das achte Transmission-Gate (8) mit dem Carry-Ausgang des dritten Volladdierers (VA3) und eine Ausgangsleitung für ein zweitstufiges Carry-Bit ($YC_{i+1,k+1}$) der zweiten Vektorkomponente über das zehnte Transmission-Gate (10) und mit dem Carry-Ausgang des vierten Volladdierers (VA4) verbunden ist, wobei die Transmission-Gates (8, 10) durch ein zweites Taktsignal (CKS) getaktet sind.

6. CORDIC-Prozessor nach Anspruch 1, **dadurch gekennzeichnet**, daß mindestens eine Vektor- und Winkel-Iterationsstufe doppelt angeordnet ist (beispielsweise IXY 1a, IXY 1b, IZ 1a, IZ 1b) um bei vorgegebener Genauigkeit (g) eines Endergebnisvektors ($X_N'$, $Y_N'$) in den einzelnen Winkel-Iterationsstufen größere Unsicherheitsbereiche (U) bei der Vorzeichendetektion zuzulassen und gleichzeitig einen für alle Kombinationen von Prozessoreingangssignalen ($X_0$, $Y_0$, $Z_0$) gleichen Korrekturfaktor (K bzw. K') zu ermöglichen.

7. CORDIC-Prozessor nach Anspruch 6, **dadurch gekennzeichnet**, daß die Anzahl der doppelt angeordneten Vektor- und Winkel-Iterationsstufen so groß ist, daß höchstens die vier höchstwertigen Carry- und Summen-Bits ($ZC_{i',9}'$, $ZS_{i',9}'...ZC_{i',12}'$, $ZS_{i',12}'$) und ein Vorzeichenausgangssignal (sign($Z_i'$)) der jeweils unmittelbar vorgeschalteten Winkel-Iterationsstufe zur Vorzeichendetektion erforderlich sind um einen für alle Winkel-Iterationsstufen gleichen, optimierten Vorzeichendetektor ($DET_{opt}$) zu ermöglichen, der einfacher aufgebaut ist als eine Kombination aus Volladdierern.

8. CORDIC-Prozessor nach Anspruch 7, **dadurch gekennzeichnet**, daß ein für alle Winkel-Iterationsstufen (IZ i) gleicher, optimierter Vorzeichendetektor ($DET_{opt}$ i) der aus den vier höchstwertigen Carry- und Summen-Bits ($ZC_{i',9}'$, $ZS_{i',9}'...ZC_{i',12}'$, $ZS_{i',12}'$) einer unmittelbar vorgeschalteten Winkel-Iterationsstufe (IZ i-1) und dem nicht invertierten Vorzeichenausgangssignal (sign ($Z_i'$)) einer unmittelbar vorgeschalteten Winkel-Iterationsstufe (IZ i-1) ein Vorzeichenausgangssignal dadurch bildet,

- daß das Vorzeichenausgangssignal (sign ($Z_i'$)) der unmittelbar vorgeschalteten Winkel-Iterationsstufe mit einem von zwei Eingängen einer Äquivalenzschaltung (EQ) verbunden ist, der Ausgang der Äquivalenzschaltung (EQ) mit einem von zwei Eingängen einer ersten EXOR-Schaltung (EX1) verbunden ist,

- daß die höchstwertigen Carry- und Summen-Bits ($ZC_{i',12}'$, $ZS_{i',12}'$) mit einer zweiten EXOR-Schaltung (EX2) verknüpft sind und der Ausgang der zweiten EXOR-Schaltung (EX2) mit dem zweiten der zwei Eingänge der Äquivalenzschaltung (EQ) verbunden ist,

- daß die zweithöchstwertigen Carry- und Summen-Bits ($ZC_{i',11}'$, $ZS_{i',11}'$) mit einer NOR-Schaltung verknüpft sind, wobei der Ausgang der NOR-Schaltung mit einem von zwei ODER-Eingängen einer ersten ODER-NAND-Schaltung (ONA1) verbunden ist und diese Carry- und Summen-Bits ebenfalls mit einer ersten NAND-Schaltung (NA1) verknüpft sind, wobei der Ausgang dieser ersten NAND-Schaltung (NA1) mit einem von zwei Eingängen einer zweiten NAND-Schaltung (NA2) verbunden ist und der Ausgang der zweiten NAND-Schaltung (NA2) mit einem direkten NAND-Eingang der ersten ODER-NAND-Schaltung (ONA1) verbunden ist,

- daß die jeweils dritthöchstwertigen Carry- und Summen-Bits ($ZC_{i',10}'$, $ZS_{i',10}'$) mit der Eingangs-ODER-Schaltung einer zweiten ODER-NAND-Schaltung (ONA2) verknüpft sind, wobei der Ausgang der zweiten ODER-NAND-Schaltung (ONA2) mit einem von zwei ODER-Eingängen einer dritten ODER-NAND-Schaltung (ONA3) verbunden ist und die dritthöchstwertigen Carry- und Summen-Bits durch eine dritte NAND-Schaltung (NA3) verknüpft sind, wobei der Ausgang dieser NAND-Schaltung (NA3) jeweils mit dem direkten NAND-Eingang der zweiten und dritten ODER-NAND-Schaltung (ONA2, ONA3) verbunden ist,

- daß die vierthöchstwertigen Carry- und Summen-Bits ($ZC_{i',9}'$, $ZS_{i',9}'$) mit einer vierten NAND-Schaltung (NA4) verknüpft sind, der Ausgang dieser NAND-Schaltung (NA4) mit dem zweiten ODER-Eingang der dritten ODER-NAND-Schaltung (ONA3) verbunden ist, und der Ausgang dieser ODER-NAND-Schaltung (ONA3) jeweils mit dem zweiten ODER-Eingang der ersten ODER-NAND-Schaltung (ONA1) und dem zweiten Eingang der zweiten NAND-Schaltung(NA2) verbunden ist, und

- daß der Ausgang der ersten ODER-NAND-Schaltung (ONA1) mit dem zweiten Eingang der ersten EXOR-Schaltung (EX1) verbunden ist und der Ausgang dieser EXOR-Schaltung (EX1) das Vorzeichenausgangssignal (sign($Z_{i+1}'$)) des optimierten Vorzeichendetektors($DET_{opt}$) liefert.

## Claims

1. A coordinate rotation digital computer processor (CORDIC processor) for vector rotations in carry-save architecture, in particular for solving problems in real-time processing, having

a) a vector path (VP) and an angle path (WP), the vector path comprising a multiplicity of series-connected vector iteration stages (IXY) and the angle path comprising a multiplicity of series-connected angle iteration stages (IZ),

b) a multiplicity of devices for mutually decoupling the vector iteration stages (IXY) and a multiplicity of devices for mutually decoupling the angle iteration stages (IZ), in order to permit processing according to the pipelining principle,

c) a multiplicity of vector iteration stages (IXY) and a multiplicity of angle iteration stages (IZ), which contain addition/subtraction circuits in which, within a clock interval, only incomplete addition/subtraction operations are performed and intermediate results are available for further processing at the end of the clock interval in the form of a carry word and of a sum word (carry-save number) on separate lines for carry bits and sum bits $(XC_{i,k}, YC_{i,k}, XS_{i,k}, YS_{i,k})$ at the output of each vector iteration stage and angle iteration stage,

d) a multiplicity of vector iteration stages (IXY) and a multiplicity of angle iteration stages (IZ), having means for realizing shift operations (multiplication by powers of the number two) which permit shifting of carry bits and sum bits,

e) a multiplicity of angle iteration stages (IZ) having sign detectors (DET) which use carry bits and sum bits for the purpose of sign detection,

f) a multiplier circuit (MULK) which is connected to the output lines for the carry words and sum words $(XC_N, YC_N, XS_N, YS_N)$ of a last vector iteration stage $(IXY_N)$ and multiplies both the carry word and the sum word of each vector component $(X_N, Y_N)$ by a correction factor (K), and

g) an adder circuit (VMA) which is connected to the output lines for the carry words and sum words $(XC_N', YC_N', XS_N', YS_N')$ of a multiplier circuit and which adds the carry words and sum words of the two vector components to components of a final result vector $(X_N', Y_N')$.

2. CORDIC processor according to Claim 1, characterized in that the angle iteration stage $(IZ_i)$ comprises a multiplicity of similar angle path base cells (BCZ i,k),

- in that the sign detectors (DETi) are connected in parallel with the angle path base cells (BCZ i,k),
- in that the input lines for angle bits $(W_{i,k}')$ of the angle path base cells (BCZ i,k) are connected to lines for the non-inverted and inverted sign output signals (sign $(Z_i')$, $\overline{\text{sign} (Z_i')}$)) of the angle iteration stage (IZ i-1) respectively connected directly upstream, in such a way that this corresponds to a formation of the product of the sign output signal (sign $(Z_i')$) of the angle iteration stage connected directly upstream and the binary presentation of a respectively prescribed, scaled negative angle step ($-2^i * \text{atan} (2^{-i})$), bits which cannot be varied by forming the product being occupied by fixed logic values (GND or VDD),
- and in that the means, required for scaling the carry words and sum words at the output of an angle iteration stage, for realizing a shift operation consist in that the output lines for the carry-save bits $(ZC_{i,k}', ZS_{i,k}')$ of an angle path base cell (BCZ i,k) are respectively connected to the inputs of the next more significant angle path base cell (BCZ i+1, k+1) of an angle iteration stage (IZ i+1) directly downstream.

3. CORDIC processor according to Claim 1, characterized in that angle path base cells (BCZ i+k) of an angle iteration stage (IZ i) each contain a full adder (VA),

- in that, as a device for mutual decoupling of the vector iteration stages for carry bit and sum bit respectively, a register (R1 and R2) clocked by clock signals (CKM, CKS) is connected downstream of the full adder (VA),
- in that the inputs of an angle path base cell correspond to the inputs of the full adder (VA), one input of the full adder (VA) being connected to the input line for an angle bit $(W_{i,k}')$, and the other two inputs of the full adder (VA) being connected to the output lines for the carry bit and sum bit $(ZC_{i,k}, ZS_{i,k})$ of the angle path base cell $(BCZ_{i-1,k})$ connected directly upstream if said upstream angle path base cell exists and being connected respectively to logic zero (GND) if said upstream angle path base cell does not exist,
- in that the output line for the carry bit $(ZC_{i+1,k}')$ comes from the next-lower base cell (BCZ i,k-1) and is only looped through by the angle path base cell,
- in that the output bit line for the sum bit $(ZS_{i+1,k}')$ is connected to the output of the first register (R1), which, for its part, is connected on the input side to the sum output of the full adder (VA), and
- in that the output line for the carry bit $(ZC_{i+1,k+1}')$ is connected, for the purpose of relaying to the next more significant angle path base cell (BCZ i,k+1), to the output of the second register (R2), which, for its part, is connected on the input side to the carry output of the full adder (VA).

4. CORDIC processor according to Claim 1, characterized in that the vector iteration stage (IXY i) comprises a multiplicity of similar vector path base cells (BCXY i,k),

- in that in each case one vector path base cell (BCXY i,k) is connected on the input side to the output lines for carry bits and sum bits ($XC_{i,k}$, $YC_{i,k}$, $XS_{i,k}$, $YS_{i,k}$) of the vector path base cell (BCXY i-1,k) connected directly upstream if the angle path base cell connected directly upstream exists and otherwise, in the case of the vector path base cell (BCXY 0,k), either the input lines for carry bits or those for sum bits are connected on the input side to the processor input lines for inputting a start vector ($X_0$, $Y_0$),
- in that, in a vector iteration stage, the means for realizing a shift operation consist in that in each case an angle path base cell ($BCXY_{i,k}$) is connected on the input side to the output lines for carry bits and sum bits ($XC_{i,k+i}$, $YC_{i,k+i}$, $XS_{i,k+i}$, $YS_{i,k+i}$) of an i-times higher vector path base cell ($BXY_{i-1,k+1}$) connected directly upstream and is connected to the highest vector path base cell ($BXY_{i-1,16}$) connected directly upstream if said vector path base cell does not exist.

5. CORDIC processor according to Claim 1, characterized in that a vector path base cell ($BCXY_{i,k}$) comprises two multiplexers (MUX1 and MUX2), four full adders (VA1...VA4), and the device for mutually decoupling the vector iteration stages in the form of 10 transmission gates (1...10),

- in that an input line for the sum bit ($XS_{i,k}$) of a first vector component (X) is connected to a first input of the first full adder (VA1), and an input line for the sum bit ($YS_{i,k}$) of a second vector component (Y) is connected to a first input of the second full adder (VA2),
- in that an input line for the carry bit ($XC_{i,k}$) of a first vector component (X) is connected to a first input of the third full adder (VA3) via the first transmission gate (1), clocked by a first clock signal (CKM), and an input line for the carry bit ($YC_{i,k}$) of a second vector component (Y) is connected to a first input of the fourth full adder (VA4) via the fourth transmission gate (4), likewise clocked by a first clock signal (CKM),
- in that an input line for the i-times more significant carry bit ($YC_{i,k+i}$) of the second vector component (Y) is connected via the first multiplexer (MUX1) to a second input of the first full adder (VA1), the i-times more significant sum bit ($YS_{i,k+i}$) of the second vector component (Y) is connected, likewise via the first multiplexer (MUX1), to the third input of the first full adder (VA1), the i-times more significant carry bit ($XC_{i,k+i}$) of the first vector component (X) is connected via the second multiplexer (MUX2) to a second input of the second full adder (VA2), and the i-times more significant sum bit ($XS_{i,k+i}$) of the first vector component (X) is connected, likewise via the second multiplexer (MUX2), to the third input of the second full adder (VA2), the multiplexers (MUX1, MUX2) inverting or not inverting the carry bits and sum bits as a function of the sign signals (sign ($Z_i'$), $\overline{sign(Z_i')}$)) of the vector iteration stage connected directly upstream,
- in that the sum output of the first full adder (VA1) is connected via the second transmission gate (2) to a second input of the third full adder (VA3), and the sum output of the second full adder (VA2) is connected via the fifth transmission gate (5) to a second input of the fourth full adder (VA4), the two transmission gates (2, 5) being clocked by a first clock signal (CKM),
- in that an output line for a first-stage carry bit ($XCI_{i+1,k+1}$) of a first vector component is connected via the third transmission gate (3) to the carry output of the first full adder (VA1), and an output line for a first-stage carry bit ($YCI_{i+1,k+1}$) of the second vector component is connected via the sixth transmission gate (6) to the carry output of the second full adder (VA2), the two transmission gates being clocked by a first clock signal (CKM),
- in that an input line for a first-stage carry bit ($XCI_{i+1,k}$) of a first vector component (X) from the next less significant vector path base cell (BCXY i,k-1) is connected to the third input of the third full adder (VA3), and an input line for a first-stage carry bit ($YCI_{i+1,k}$) from the second vector component (Y) of the next less significant vector path base cell (BCXY i,k-1) is connected to the third input of the fourth full adder (VA4),
- in that the input lines for second-stage carry bits ($XC_{i+1,k}$, $YC_{i+1,k}$) of the vector components (X,Y) from the next less significant vector path base cell (BCXY i,k-1) are looped through onto the output lines for that vector iteration stage of the vector path base cell (BCXY i,k) which is connected directly downstream,
- in that the sum output of the third full adder (VA3) is connected via the seventh transmission gate (7) to the output line for the sum bit ($XS_{i+1,k}$) of a first component of the iteration stage connected directly downstream, and the sum output of the fourth full adder (VA4) is connected via the ninth transmission gate (9) to the output line ($YS_{i+1,k}$) for the sum bit of the second component of the vector iteration stage connected directly downstream, the transmission gates (7, 9) being clocked by a second clock signal (CKS),
- and in that an output line for a second-stage carry bit ($XC_{i+1,k+1}$) of a first vector component is connected via the eighth transmission gate (8) to the carry output of the third full adder (VA3), and an output line for a second-stage carry bit ($YC_{i+1,k+1}$) of the second vector component is connected via the tenth transmission gate (10) to the carry output of the fourth full adder (VA4), the transmission gates (8, 10) being clocked by a second clock signal (CKS).

6. CORDIC processor according to Claim 1, characterized in that at least one vector and angle iteration stage is arranged in a dual fashion (for example IXY 1a, IXY 1b, IZ 1a, IZ 1b) in order, for a given accuracy (g) of a final result vector $(X_N', Y_N')$, to permit in the individual angle iteration stages larger uncertainty ranges (U) in the sign detection and, at the same time, a correction factor (K or K') which is the same for all combinations of processor input signals $(X_0, Y_0, Z_0)$.

7. CORDIC processor according to Claim 6, characterized in that the number of the vector and angle iteration stages arranged in a dual fashion is of such a size that at most the four most significant carry bits and sum bits $(ZC_{i,9}', ZS_{i,9}' ...Zc_{i,12}', ZS_{i,12}')$ and one sign output signal $(sign(Z_i'))$ of the angle iteration stage respectively connected directly upstream are required for sign detection in order to permit an optimized sign detector $(DET_{opt})$ which is the same for all angle iteration stages and is of simpler design than a combination of full adders.

8. CORDIC processor according to Claim 7, characterized in that an optimized sign detector $(DET_{opt} i)$ which is the same for all angle iteration stages (IZ i) forms a sign output signal from the four most significant carry bits and sum bits $(ZC_{i,9}', ZS_{i,9}' ...ZC_{i,12}', ZS_{i,12}')$ of an angle iteration stage (IZ i-1) connected directly upstream and the non-inverted sign output signal $(sign (Z_i'))$ of an angle iteration stage (IZ i-1) connected directly upstream due to the fact that

- the sign output signal $(sign (Z_i'))$ of the angle iteration stage connected directly upstream is connected to one of two inputs of an equivalent circuit (EQ), and the output of the equivalent circuit (EQ) is connected to one of two inputs of a first EXOR circuit (EX1),
- in that the most significant carry bits and sum bits $(ZC_{i,12}', ZS_{i,12}')$ are combined by means of a second EXOR circuit (EX2), and the output of the second EXOR circuit (EX2) is connected to the second of the two inputs of the equivalent circuit (EQ),
- in that the second most significant carry bits and sum bits $(ZC_{i,11}', ZS_{i,11}')$ are combined by means of a NOR circuit, the output of the NOR circuit being connected to one of two OR inputs of a first OR-NAND circuit (ONA1) and these carry bits and sum bits likewise being combined by means of a first NAND circuit (NA1), the output of this first NAND circuit (NA1) being connected to one of two inputs of a second NAND circuit (NA2) and the output of the second NAND circuit (NA2) being connected to a direct NAND input of the first OR-NAND circuit (ONA1),
- in that the respectively third most significant carry bits and sum bits $(ZC_{i,10}', ZS_{i,10}')$ are combined by means of the input OR circuit of a second OR-RAND circuit (ONA2), the output of the second OR-NAND circuit (ONA2) being connected to one of two OR inputs of a third OR-NAND circuit (ONA3) and the third most significant carry bits and sum bits being combined by means of a third NAND circuit (NA3), the output of said NAND circuit (NA3) being respectively connected to the direct NAND input of the second and third OR-NAND circuit (ONA2, ONA3),
- in that the fourth most significant carry bits and sum bits $(ZC_{i,9}', ZS_{i,9}')$ are combined by means of a fourth NAND circuit (NA4), the output of said NAND circuit (NA4) is connected to the second OR input of the third OR-NAND circuit (ONA3), and the output of said OR-NAND circuit (ONA3) is respectively connected to the second OR input of the first OR-NAND circuit (ONA1) and to the second input of the second NAND circuit (NA2), and
- in that the output of the first OR-NAND circuit (ONA1) is connected to the second input of the first EXOR circuit (EX1) and the output of said EXOR circuit (EX1) supplies the sign output signal $(sign (Z_{i+1}'))$ of the optimized sign detector $(DET_{opt})$.

**Revendications**

1. Coordinate Rotation Digital Computer-processeur (CORDIC-processeur) pour la rotation de vecteurs avec architecture carry-save, notamment pour la résolution de problèmes de traitement en temps réel, comportant

   a) un trajet vectoriel (VP) et un trajet angulaire (WP), le trajet vectoriel étant composé d'une multiplicité d'étapes d'itération vectorielles (IXY) couplées en série et le trajet angulaire d'une multiplicité d'étapes d'itération angulaires (IZ) couplées en série,
   b) une multiplicité de dispositifs destinés au découplage réciproque des étapes d'itération vectorielles (IXY) et une multiplicité de dispositifs destinés au découplage réciproque des étapes d'itération angulaires (IZ), pour permettre un traitement selon le principe du traitement en pipeline (pipelining),
   c) une multiplicité d'étapes d'itération vectorielles (IXY) et une multiplicité d'étapes d'itération angulaires (IZ), qui contiennent les circuits d'addition/de soustraction, dans lesquels, au sein d'un intervalle de synchronisation, ne se produisent que des opérations d'addition/de soustraction incomplètes et des résultats intermédiaires à la fin de l'intervalle de synchronisation sous la forme d'un mot carry et d'un mot totaliseur (nombre carry-save) sur des circuits séparés pour bits carry et bits totaliseurs ($XC_{i,k}$, $YC_{i,k}$, $XS_{i,k}$, $YS_{i,k}$) se trouvent à disposition pour un traitement ultérieur à la sortie de chaque étape d'itération angulaire,

d) une multiplicité d'étapes d'itération vectorielles (IXY) et une multiplicité d'étapes d'itération angulaires (IZ), avec des moyens destinés à la réalisation d'opérations de décalage (multiplication avec puissances du nombre deux), qui permettent un décalage de bits carry et totaliseurs,

e) une multiplicité d'étapes d'itération angulaires (IZ) avec des détecteurs de signes (DET), qui utilisent des bits carry et totaliseurs pour la détection de signes,

f) un circuit-multiplicateur (MULK), qui est relié aux lignes de sortie pour les mots carry et totaliseurs ($XC_N$, $YC_N$, $XS_N$, $YS_N$), d'une dernière étape d'itération vectorielle ($IXY_N$) et multiplie non seulement le mot carry mais aussi le mot totaliseur de chaque composante vectorielle ($X_N$, $Y_N$) par un coefficient de correction (K), et

g) un circuit additionneur (VMA), qui est relié aux lignes de sortie pour les mots carry et totaliseurs ($XC_N'$, $YC_N'$, $XS_N'$, $YS_N'$), d'un circuit multiplicateur et qui rajoute les mots carry et totaliseurs des deux composantes vectorielles aux composantes d'un vecteur de résultat final ($X_N'$, $Y_N'$).

2. CORDIC-processeur selon la revendication 1, caractérisé en ce que l'étape d'itération angulaire ($IZ_i$) se compose d'une multiplicité de cellules de base à trajet angulaire (BCZ i,k) similaires,

- en ce que les détecteurs de signes (DETi) sont couplés en parallèle aux cellules de base à trajet angulaire (BCZ i, k),
- en ce que les lignes d'entrée, pour les bits angulaires ($W_{i,k}'$), des cellules de base à trajet angulaire (BCZ i,k) sont reliées de telle manière aux lignes pour les signaux de sortie de signes non invertis et invertis (sign ($Z_i'$), sign ($Z_i'$)) de l'étape d'itération angulaire (IZi-1) à chaque fois directement montée en amont que ceci correspond à une formation du produit à partir du signal de sortie de signes (sign ($Z_i'$)) de l'étape d'itération angulaire directement montée en amont et de la représentation binaire d'une étape angulaire ($-2^i * \text{atan}(2^{-i})$) négative cadrée, à chaque fois prédéfinie, des bits non modifiables étant affectés de valeurs logiques fixes (GND ou VDD) par la formation du produit,
- et en ce que les moyens nécessaires pour le cadrage des mots carry et totaliseurs à la sortie d'une étape d'itération angulaire, destinés à réaliser une opération de décalage consistent à ce que les lignes de sortie pour les bits carry-save ($Zc_{i,k}'$, $Zs_{i,k}'$) d'une cellule de base à trajet angulaire (BCZ i,k) sont à chaque fois reliées aux entrées de la cellule de base à trajet angulaire immédiatement supérieure (BCZ i+1, k+1) d'une étape d'itération angulaire directement consécutive (IZ i+1).

3. CORDIC-processeur selon la revendication 1, caractérisé en ce que les cellules de base à trajet angulaire (BCZ i+k) d'une étape d'itération angulaire (IZ i) contiennent chacune un additionneur intégral (VA),

- en ce que un registre (R1 et R2), synchronisé par des signaux de synchronisation (CKM, CKS), est monté en aval de l'additionneur intégral (VA) comme dispositif pour le découplage réciproque des étapes d'itération vectorielles à chaque fois pour le bit carry et totaliseur,
- en ce que les entrées d'une cellule de base à trajet angulaire correspondent aux entrées de l'additionneur intégral (VA), une entrée de l'additionneur intégral (VA) étant reliée à la ligne d'entrée pour un bit angulaire ($W_{i,k}'$), et les deux autres entrées de l'additionneur intégral (VA) étant reliées aux lignes de sortie pour le bit carry et totaliseur ($ZC_{i,k}$, $ZS_{i,k}$) de la cellule de base à trajet angulaire directement montée en amont ($BCZ_{i-1, k}$), si cette cellule de base à trajet angulaire montée en amont existe, et étant à chaque fois couplées au zéro logique (GND), si cette cellule de base à trajet angulaire montée en amont n'existe pas,
- en ce que la ligne de sortie pour le bit carry ($ZC_{i+1,k}'$) provient de la cellule de base immédiatement inférieure (BCZ i,k-1) et passe seulement par la cellule de base à trajet angulaire,
- en ce que la ligne de sortie de bits pour le bit totaliseur ($ZS_{i+1,k}'$) est reliée à la sortie du premier registre (R1), qui de son côté est relié du côté de l'entrée à la sortie totalisatrice de l'additionneur intégral (VA), et
- en ce que la ligne de sortie pour le bit carry ($ZC_{i+1, k+1}'$) destinée à la transmission à la cellule de base à trajet angulaire immédiatement supérieure (BCZi,k+1) est reliée à la sortie du deuxième registre (R2), qui de son côté est relié du côté de l'entrée à la sortie carry de l'additionneur intégral (VA).

4. CORDIC-processeur selon la revendication 1, caractérisé en ce que l'étape d'itération vectorielle (IXY i) se compose d'une multiplicité de cellules de base à trajet vectorielles (BCXY i,k) similaires,

- en ce que à chaque fois une cellule de base à trajet vectoriel (BCXY i,k) est reliée du côté de l'entrée aux lignes de sortie pour des bits carry et totaliseurs ($XC_{i,k}$, $YC_{i,k}$, $XS_{i,k}$, $YS_{i,k}$) de la cellule de base à trajet vectoriel directement montée en amont (BCXY i-1,k), si la cellule de base à trajet angulaire directement montée en amont existe et, sinon, pour la cellule de base à trajet vectoriel (BCXY 0,k) du côté de l'entrée soit les lignes d'entrée pour les bits carry, soit celles pour les bits totaliseurs sont reliées aux lignes d'entrée du processeur pour l'introduction d'un vecteur de départ ($X_0$, $Y_0$),

- en ce que dans une étape d'itération vectorielle, les moyens destinés à la réalisation d'une opération de décalage consistent à ce que à chaque fois une cellule de base à trajet angulaire ($BCXY_{i,k}$) est reliée du côté de l'entrée aux lignes de sortie pour bits carry et totaliseurs ($Xc_{i,k+i}$, $YC_{i,k+i}$, $XS_{i,k+i}$, $YS_{i,k+i}$) d'une cellule de base à trajet vectoriel i-fois supérieure directement montée en amont ($BXY_{i-1, k+i}$) et dans le cas où cette cellule de base à trajet vectoriel n'existe pas, est reliée à la cellule de base à trajet vectoriel maximale directement montée en amont ($BXY_{i-1,16}$).

5. CORDIC-processeur selon la revendication 1, caractérisé en ce que une cellule de base à trajet vectoriel ($BCXY_{i,k}$) se compose de deux multiplexeurs (MUX1 et MUX2), de quatre additionneurs intégraux (VA1...VA4) et du dispositif pour le découplage réciproque des étapes d'itération vectorielles sous la forme de 10 grilles de transmission (1... 10),

- en ce que une ligne d'entrée pour le bit totaliseur ($XS_{i,k}$) d'une première composante vectorielle (X) est reliée à une première entrée du premier additionneur intégral (VA1) et une ligne d'entrée pour le bit totaliseur ($YS_{i,k}$) d'une deuxième composante vectorielle (Y) est reliée à une première entrée du deuxième additionneur intégral (VA2),

- en ce que une ligne d'entrée pour le bit carry ($XC_{i,k}$) d'une première composante vectorielle (X) est reliée à une première entrée du troisième additionneur intégral (VA3) au moyen de la première grille de transmission (1) synchronisée par un premier signal de synchronisation (CKM) et une ligne d'entrée pour le bit carry ($YC_{i,k}$) d'une deuxième composante vectorielle (Y) est reliée à une première entrée du quatrième additionneur intégral (VA4) au moyen de la quatrième grille de transmission (4) également synchronisée par un premier signal de synchronisation (CKM),

- en ce que une ligne d'entrée pour le bit carry i-fois supérieur ($YC_{i,k+i}$) de la deuxième composante vectorielle (Y) est reliée au moyen du premier multiplexeur (MUX1) à une deuxième entrée du premier additionneur intégral (VA1), le bit totaliseur i-fois supérieur ($YS_{i,k+i}$) de la deuxième composante vectorielle (Y) est relié également au moyen du premier multiplexeur (MUX1) à la troisième entrée du premier additionneur intégral (VA1), le bit carry i-fois supérieur ($XC_{i,k+i}$) de la première composante vectorielle (X) est relié au moyen du deuxième multiplexeur (MUX2) à une deuxième entrée du deuxième additionneur intégral (VA2) et le bit totaliseur i-fois supérieur ($XS_{i,k+i}$) de la première composante vectorielle (X) est relié également au moyen du deuxième multiplexeur (MUX2) à la troisième entrée du deuxième additionneur intégral (VA2), les multiplexeurs (MUX1, MUX2), en fonction des signaux de signes (sign ($Z_i'$), sign ($Z_i'$)) de l'étape d'itération vectorielle directement montée en amont, invertissent ou n'invertissent pas les bits carry et totaliseurs,

- en ce que la sortie totalisatrice du premier additionneur intégral (VA1) est reliée au moyen de la deuxième grille de transmission (2) à une deuxième entrée du troisième additionneur intégral (VA3) et la sortie totalisatrice du deuxième additionneur intégral (VA2) est reliée au moyen de la cinquième grille de transmission (5) à une deuxième entrée du quatrième additionneur intégral (VA4), les deux grilles de transmission (2, 5) étant synchronisées par un premier signal de synchronisation (CKM),

- en ce que une ligne de sortie pour un bit carry du premier niveau ($XCl_{i+1, k+1}$) d'une première composante vectorielle est reliée au moyen de la troisième grille de transmission (3) à la sortie carry du premier additionneur intégral (VA1) et une ligne de sortie pour un bit carry du premier niveau ($YCl_{i+1,k+1}$) de la deuxième composante vectorielle est reliée au moyen de la sixième grille de transmission (6) à la sortie carry du deuxième additionneur intégral (VA2), les deux grilles de transmission étant synchronisées par un premier signal de synchronisation (CKM),

- en ce que une ligne d'entrée pour un bit carry du premier niveau ($XCl_{i+1,k}$) d'une première composante vectorielle (X) de la cellule de base à trajet vectoriel immédiatement inférieure (BCXY i,k-1) est reliée à la troisième entrée du troisième additionneur intégral (VA3) et une ligne d'entrée pour un bit carry du premier niveau ($YCl_{i+1,k}$) de la deuxième composante vectorielle (Y) de la deuxième cellule de base à trajet vectoriel immédiatement inférieure (BCXY i, k-1) est reliée à la troisième entrée du quatrième additionneur intégral (VA4),

- en ce que les lignes d'entrée pour des bits carry du deuxième niveau ($XC_{i+1,k}$, $YC_{i,1,k}$) des composantes vectorielles (X,Y) de la cellule de base à trajet vectoriel immédiatement inférieure (BCXY i,k-1) sont amenées vers les lignes de sortie, pour l'étape d'itération vectorielle immédiatement montée en aval, de la cellule de base à trajet vectoriel (BCXY i,k),

- en ce que la sortie totalisatrice du troisième additionneur intégral (VA3) est reliée au moyen de la septième grille de transmission (7) à la ligne de sortie pour le bit totaliseur ($XS_{i+1,k}$) d'une première composante de l'étape d'itération immédiatement montée en aval et la sortie totalisatrice du quatrième additionneur intégral (VA4) est reliée au moyen de la neuvième grille de transmission (9) à la ligne de sortie ($YS_{i+1,k}$), pour le bit totaliseur, de la deuxième composante de l'étape d'itération vectorielle directement montée en aval, les grilles de transmission (7, 9) étant synchronisées par un deuxième signal de synchronisation (CKS),

- et en ce que une ligne de sortie pour un bit carry du deuxième niveau ($Xc_{i+1,k+1}$) d'une première composante vectorielle est reliée au moyen de la huitième grille de transmission (8) à la sortie carry du troisième additionneur intégral (VA3) et une ligne de sortie pour un bit carry du deuxième niveau ($YC_{i+1,k+1}$) de la deuxième composante vectorielle est reliée au moyen de la dixième grille de transmission (10) à la sortie carry du quatrième additionneur intégral (VA4), les grilles de transmission (8, 10) étant synchronisées par un deuxième signal de synchronisation (CKS).

6. CORDIC-processeur selon la revendication 1, caractérisé en ce que au moins une étape d'itération vectorielle et angulaire est organisée en double (par exemple IXY 1a, IXY 1b, IZ 1a, IZ 1b) pour admettre avec une précision prédéfinie (g) d'un vecteur de résultat final ($X_N'$, $Y_N'$) dans les différentes étapes d'itération angulaire de plus grandes zones d'incertitude (U) lors de la détection de signes et permettre simultanément un coefficient de correction (K ou K') identique pour toutes les combinaisons de signaux d'entrée du processeur ($X_0$, $Y_0$, $Z_0$).

7. CORDIC-processeur selon la revendication 6, caractérisé en ce que le nombre des étapes d'itération vectorielles et angulaires organisées en double est si grand que au maximum les quatre bit carry et totaliseurs maximaux ($ZC_{i,9}'$, $ZS_{i,9}'$...$ZC_{i,12}'$, $ZS_{i,12}'$) et un signal de sortie de signes ($\text{sign}(Z_i')$) de l'étape d'itération angulaire à chaque fois directement montée en amont pour la détection de signes sont nécessaires pour rendre possible un détecteur de signes ($DET_{opt}$) optimisé, identique pour toutes les étapes d'itération angulaires, qui est de structure plus simple qu'une combinaison d'additionneurs intégraux.

8. CORDIC-processeur selon la revendication 7, caractérisé en ce que un détecteur de signes ($DET_{opt}i$) optimisé, identique pour toutes les étapes d'itération angulaires (IZ i), forme un signal de sortie de signes à partir des quatre bits carry et totaliseurs maximaux ($ZC_{i,9}'$, $ZS_{i,9}'$...$ZC_{i,12}'$, $Zs_{i,12}'$) d'une étape d'itération angulaire (IZ i-1) montée directement en amont et du signal de sortie de signes ($\text{sign}(Z_i')$) non inverti d'une étape d'itération angulaire (IZ i-1) directement montée en amont, par le fait

- que le signal de sortie de signes ($\text{sign}(Z_i')$) de l'étape d'itération angulaire directement montée en amont est relié à l'une des deux entrées d'un circuit équivalent (EQ), la sortie du circuit équivalent (EQ) est reliée à l'une des deux entrées d'un premier circuit EXOR (EX1),
- que les bits carry et totaliseurs maximaux ($ZC_{i,12}'$, $ZS_{i,12}'$) sont enchaînés à un deuxième circuit EXOR (EX2) et la sortie du deuxième circuit EXOR (EX2) est reliée à la deuxième des deux entrées du circuit équivalent (EQ),
- que les bits carry et totaliseurs deuxièmes maximaux ($ZC_{i,11}'$, $ZS_{i,11}'$) sont enchaînés à un circuit NOR, la sortie du circuit NOR étant reliée à l'une des deux entrées OU d'un premier circuit OU-PAS ET (ONA1) et ces bits carry et totaliseurs sont également enchaînés avec un premier circuit PAS ET (NA1), la sortie de ce premier circuit PAS ET (NA1) étant reliée à l'une des deux entrées d'un deuxième circuit PAS ET (NA2) et la sortie du deuxième circuit PAS ET (NA2) étant reliée à une entrée PAS ET directe du premier circuit OU-PAS ET (ONA1),
- que les bits carry et totaliseurs respectivement troisièmes maximaux ($ZC_{i,10}'$, $ZS_{i,10}'$) sont enchaînés au circuit OU d'entrée d'un deuxième circuit OU-PAS ET (ONA2), la sortie du deuxième circuit OU-PAS ET (ONA2) étant reliée à l'une des deux entrées OU d'un troisième circuit OU-PAS ET (ONA3) et les bits carry et totaliseurs troisièmes maximaux sont enchaînés par un troisième circuit PAS ET (NA3), la sortie de ce circuit PAS ET (NA3) étant à chaque fois reliée à l'entrée PAS ET directe du deuxième et troisième circuit OU-PAS ET (ONA2, ONA3),
- que les bits carry et totaliseurs quatrièmes maximaux ($ZC_{i,9}'$, $ZS_{i,9}'$) sont enchaînés à un quatrième circuit PAS ET (NA4), la sortie de ce circuit PAS ET (NA4) est reliée à la deuxième entrée OU du troisième circuit OU-PAS ET (ONA3), et la sortie de ce circuit OU-PAS ET (ONA3) est reliée à chaque fois à la deuxième entrée OU du premier circuit OU-PAS ET (ONA1) et à la deuxième entrée du deuxième circuit PAS ET (NA2), et
- que la sortie du premier circuit OU-PAS ET (ONA1) est reliée à la deuxième entrée du premier circuit EXOR (EX1) et la sortie de ce circuit EXOR (EX1) fournit le signal de sortie de signes ($\text{sign}(Z_{i+1}')$) du détecteur de signe optimisé ($DET_{opt}$).

FIG 1

## FIG 3

## FIG 2

sign(Ergebnis) r<m

Ergebnis

EP 0 453 641 B1

# FIG 4

# FIG5

## FIG 6

## FIG 7

# FIG 8